# EUROPEAN PATENT APPLICATION

(11) **EP 4 603 566 A1**
(43) Date of publication of application: **20.08.2025**
(21) Application number: 23891661.3
(22) Date of filing: 16.11.2023
(51) Int. Cl.: C10M 107/24, C09K 5/04, C10M 105/38, C10N 30/00, C10N 40/30

(54) **WORKING FLUID COMPOSITION, REFRIGERATION OIL, AND REFRIGERATOR**

(30) Priority: 18.11.2022 JP 2022185131
(71) Applicant: ENEOS Corporation, Chiyoda-ku Tokyo 100-8162 (JP); DAIKIN INDUSTRIES, LTD., Osaka-shi, Osaka 530-0001 (JP)
(72) Inventor: MIZUTANI, Yuya, Tokyo 100-8162 (JP); OKAZAKI, Motoya, Tokyo 100-8162 (JP); OGATA, Hidetoshi, Tokyo 100-8162 (JP); KAWAGUCHI, Masaki, Tokyo 100-8162 (JP); GOTO, Satoshi, Tokyo 100-8162 (JP)
(74) Representative: Grünecker Patent- und Rechtsanwälte PartG mbB
(86) International application number: PCT/JP2023/041335
(87) International publication number: WO 2024/106514

(57) **Abstract**

A working fluid composition containing a refrigerating machine oil containing at least one base oil selected from the group consisting of polyvinyl ether, polyalkylene glycol, and polyol ester, and a refrigerant containing trans-1,2-difluoroethylene (HFO-1132(E)) and 2,3,3,3-tetrafluoropropene (HFO-1234yf).

## Description

### Technical Field

The present invention relates to a working fluid composition, a refrigerating machine oil, and a refrigerating machine.

### Background Art

To prevent global warming, the development of refrigerating machines (refrigerating devices, air conditioning devices, etc.) using low GWP refrigerants with low environmental impact is becoming increasingly important. Conventionally, saturated hydrofluorocarbon refrigerants such as R404A and R134a have been used in household air conditioners or vehicle air conditioners. However, in recent years, studies have been conducted on refrigerating machines using unsaturated hydrofluorocarbon refrigerants such as HFO-1234yf as alternative refrigerants to saturated hydrofluorocarbon refrigerants (see, for example, Patent Literature 1).

### Citation List

### Patent Literature

[Patent Literature 1] JP 2010-255966 A

### Summary of Invention

### Technical Problem

A refrigerant coexists with a refrigerating machine oil for lubricating sliding members within a refrigerating machine, existing in the state of so-called a working fluid composition. The characteristics of the working fluid composition affect the characteristics of the refrigerating machine, and it is important to design the working fluid composition with desired characteristics by appropriately combining a refrigerant and a refrigerating machine oil.

One aspect of the present invention aims to provide a novel working fluid composition.

### Solution to Problem

The present inventors have completed a novel working fluid composition by combining a refrigerating machine oil containing a specific base oil and a refrigerant containing trans-1,2-difluoroethylene (HFO-1132(E)) and 2,3,3,3-tetrafluoropropene (HFO-1234yf), and also have found that this novel working fluid composition, in one aspect, can reduce the refrigerant fraction (refrigerant dissolution amount) and increase the refrigerant dissolution viscosity under the same temperature and pressure conditions compared to a working fluid composition using HFO-1234yf alone as the refrigerant.

The present invention includes the following aspects.
[1] A working fluid composition containing a refrigerating machine oil containing at least one base oil selected from the group consisting of polyvinyl ether, polyalkylene glycol, and polyol ester, and a refrigerant containing trans-1,2-difluoroethylene (HFO-1132(E)) and 2,3,3,3-tetrafluoropropene (HFO-1234yf).
[2] The working fluid composition according to [1], wherein the working fluid composition has a refrigerant fraction at 80°C and 2.5 MPa of 80% by mass or less.
[3] The working fluid composition according to [1] or [2], wherein the working fluid composition has a refrigerant dissolution viscosity at 80°C and 2.5 MPa of 1 mm²/s or higher.
[4] The working fluid composition according to any one of [1] to [3], wherein the working fluid composition has a refrigerant fraction at 80°C and 2 MPa of 30% by mass or less.
[5] The working fluid composition according to any one of [1] to [4], wherein the working fluid composition has a refrigerant dissolution viscosity at 80°C and 2 MPa of 2.2 mm²/s or higher.
[6] The working fluid composition according to any one of [1] to [5], wherein the working fluid composition has a refrigerant fraction at 80°C and 1.5 MPa of 20% by mass or less.
[7] The working fluid composition according to any one of [1] to [6], wherein the working fluid composition has a refrigerant dissolution viscosity at 80°C and 1.5 MPa of 3.5 mm²/s or higher.
[8] The working fluid composition according to any one of [1] to [7], wherein the working fluid composition has a two-layer separation temperature at an oil fraction of 10 to 30% by mass of -30°C or lower.
[9] The working fluid composition according to any one of [1] to [8], wherein the refrigerating machine oil further contains an acid scavenger.
[10] The working fluid composition according to any one of [1] to [9], wherein the refrigerating machine oil further contains an antioxidant.
[11] The working fluid composition according to any one of [1] to [10], wherein the refrigerating machine oil further contains an antiwear agent.
[12] The working fluid composition according to any one of [1] to [11], wherein the refrigerating machine oil further contains an acid scavenger, an antioxidant, and an antiwear agent.
[13] The working fluid composition according to any one of [9] to [12], wherein the refrigerating machine oil further contains at least one additive selected from the group consisting of a metal deactivator, a friction modifier, an antifoaming agent, a viscosity index improver, a pour point depressant, a detergent dispersant, and a rust inhibitor.
[14] A refrigerating machine oil containing at least one base oil selected from the group consisting of polyvinyl ether, polyalkylene glycol, and polyol ester, and being used together with a refrigerant containing trans-1,2-difluoroethylene (HFO-1132(E)) and 2,3,3,3-tetrafluoropropene (HFO-1234yf).
[15] A refrigerating machine containing a refrigerant circulation system containing a compressor, a condenser, an expansion mechanism, and an evaporator, wherein the refrigerant circulation system is filled with a refrigerating machine oil containing at least one base oil selected from the group consisting of polyvinyl ether, polyalkylene glycol, and polyol ester, and a refrigerant containing trans-1,2-difluoroethylene (HFO-1132(E)) and 2,3,3,3-tetrafluoropropene (HFO-1234yf).

### Advantageous Effects of Invention

According to one aspect of the present invention, a novel working fluid composition can be provided. This novel working fluid composition, in one aspect, can reduce the refrigerant fraction (refrigerant dissolution amount) and increase the refrigerant dissolution viscosity under the same temperature and pressure conditions compared to a working fluid composition using HFO-1234yf alone as the refrigerant.

### Brief Description of Drawing

[Fig. 1] Fig. 1 is a schematic diagram showing one embodiment of a refrigerating machine.
[Fig. 2] Fig. 2 is a graph showing the relationship between the HFO-1132(E) fraction in a mixed refrigerant of HFO-1132(E) and HFO-1234yf and the boiling point of the mixed refrigerant.

### Description of Embodiments

Hereinafter, embodiments of the present invention will be described in detail with reference to the drawings as appropriate.

One embodiment of the present invention is a working fluid composition containing a refrigerating machine oil containing at least one base oil selected from the group consisting of a polyvinyl ether, a polyalkylene glycol, and a polyol ester, and a refrigerant containing trans-1,2-difluoroethylene (HFO-1132(E)) and 2,3,3,3-tetrafluoropropene (HFO-1234yf). Another embodiment of the present invention is a refrigerating machine oil containing at least one base oil selected from the group consisting of a polyvinyl ether, a polyalkylene glycol, and a polyol ester, and being used together with a refrigerant containing trans-1,2-difluoroethylene (HFO-1132(E)) and 2,3,3,3-tetrafluoropropene (HFO-1234yf).

The polyvinyl ether has a structural unit represented by the following formula (1): 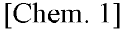 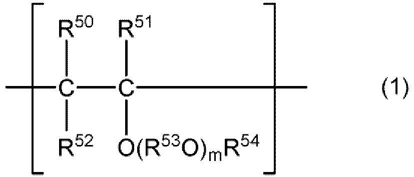 wherein R⁵⁰, R⁵¹, and R⁵² may be the same or different and each represents a hydrogen atom or a hydrocarbon group, R⁵³ represents a divalent hydrocarbon group or a divalent ether-bond-containing hydrocarbon group, R⁵⁴ represents a hydrocarbon group, and m represents an integer of 0 or more. When m is 2 or more, multiple R⁵³s may be the same or different.

The number of carbon atoms of the hydrocarbon groups represented by R⁵⁰, R⁵¹, and R⁵² is preferably 1 or more, more preferably 2 or more, and even more preferably 3 or more, and preferably 8 or less, more preferably 7 or less, and even more preferably 6 or less. It is preferable that at least one of R⁵⁰, R⁵¹, and R⁵² is a hydrogen atom, and it is more preferable that all of R⁵⁰, R⁵¹, and R⁵² are hydrogen atoms.

The number of carbon atoms of the divalent hydrocarbon group and the ether-bond-containing hydrocarbon group represented by R⁵³ is preferably 1 or more, more preferably 2 or more, and even more preferably 3 or more, and preferably 10 or less, more preferably 8 or less, and even more preferably 6 or less. The divalent ether-bond-containing hydrocarbon group represented by R⁵³ may be, for example, a hydrocarbon group having an oxygen forming an ether bond in a side chain.

R⁵⁴ is preferably a hydrocarbon group having 1 to 20 carbon atoms. Examples of such a hydrocarbon group include alkyl groups, cycloalkyl groups, phenyl groups, aryl groups, and arylalkyl groups. The hydrocarbon group is preferably an alkyl group, more preferably an alkyl group having 1 to 5 carbon atoms.

m is preferably 0 or more, more preferably 1 or more, and even more preferably 2 or more, and preferably 20 or less, more preferably 18 or less, and even more preferably 16 or less. The average value of m in all structural units constituting the polyvinyl ether is preferably 0 to 10.

The polyvinyl ether may be a homopolymer composed of one type of structural unit represented by the formula (1), a copolymer composed of two or more types of structural units represented by the formula (1), or a copolymer composed of structural units represented by the formula (1) and other structural units. By being a copolymer, the polyvinyl ether can further improve lubricity, insulation, and hygroscopicity while satisfying compatibility of the refrigerating machine oil with the refrigerant. In this case, by appropriately selecting the types of monomers used as raw materials, the types of initiators, the ratio of structural units in the copolymer, etc., it is possible to achieve the desired properties of the refrigerating machine oil. The copolymer may be a block copolymer or a random copolymer.

When the polyvinyl ether is a copolymer, the copolymer preferably has structural unit (1-1) represented by the formula (1) in which R⁵⁴ is an alkyl group having 1 to 3 carbon atoms and structural unit (1-2) represented by the formula (1) in which R⁵⁴ is an alkyl group having 3 to 20 carbon atoms. The number of carbon atoms of R⁵⁴ in structural unit (1-2) is preferably 3 to 10, more preferably 3 to 8. R⁵⁴ in structural unit (1-1) is particularly preferably an ethyl group, and R⁵⁴ in structural unit (1-2) is particularly preferably an isobutyl group. When polyvinyl ether is a copolymer having the above structural units (1-1) and (1-2), the molar ratio of structural unit (1-1) to structural unit (1-2) is preferably 5:95 to 95:5, more preferably 20:80 to 90:10, and even more preferably 70:30 to 90:10. When the molar ratio is within the above range, compatibility with the refrigerant can be further improved, and hygroscopicity can be reduced.

The polyvinyl ether may be composed only of structural unit(s) represented by the formula (1), but it may also be a copolymer further having a structural unit represented by the following formula (2). In this case, the copolymer may be a block copolymer or a random copolymer. 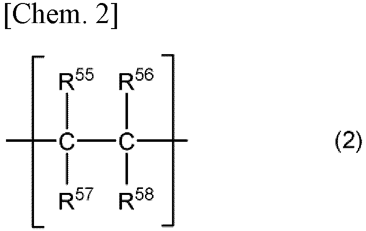 wherein R⁵⁵ to R⁵⁸ may be the same or different and each represents a hydrogen atom or a hydrocarbon group having 1 to 20 carbon atoms.

The polyvinyl ether is produced, for example, by polymerizing a vinyl ether monomer corresponding to the structural unit represented by the formula (1), or by copolymerizing a vinyl ether monomer corresponding to the structural unit represented by the formula (1) and a hydrocarbon monomer having an olefinic double bond corresponding to the structural unit represented by the formula (2). As the vinyl ether monomer corresponding to the structural unit represented by the formula (1), a monomer represented by the following formula (3) is preferable. 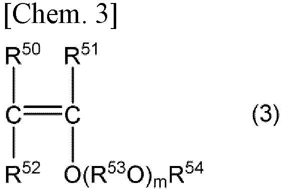 wherein R⁵⁰, R⁵¹, R⁵², R⁵³, R⁵⁴, and m have the same definitions as in the formula (1).

The polyvinyl ether preferably has the following terminal structure (I) or (II).
(I) A structure in which one terminal is represented by the formula (4) or (5) and the other terminal is represented by the formula (6) or (7). 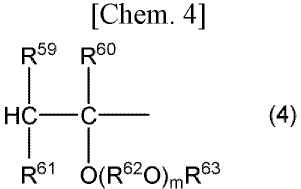 In the formula (4), R⁵⁹, R⁶⁰, and R⁶¹ may be the same or different and each represents a hydrogen atom or a hydrocarbon group having 1 to 8 carbon atoms, R⁶² represents a divalent hydrocarbon group having 1 to 10 carbon atoms or a divalent ether-bond-containing hydrocarbon group, R⁶³ represents a hydrocarbon group having 1 to 20 carbon atoms, and m has the same definition as in the formula (1). When m is 2 or more, multiple R⁶²s may be the same or different. 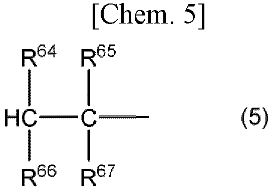 In the formula (5), R⁶⁴, R⁶⁵, R⁶⁶, and R⁶⁷ may be the same or different and each represents a hydrogen atom or a hydrocarbon group having 1 to 20 carbon atoms. 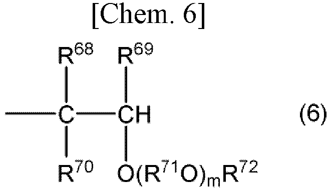 In the formula (6), R⁶⁸, R⁶⁹, and R⁷⁰ may be the same or different and each represents a hydrogen atom or a hydrocarbon group having 1 to 8 carbon atoms, R⁷¹ represents a divalent hydrocarbon group having 1 to 10 carbon atoms or a divalent ether-bond-containing hydrocarbon group, R⁷² represents a hydrocarbon group having 1 to 20 carbon atoms, and m has the same definition as in the formula (1). When m is 2 or more, multiple R⁷¹'ₛ may be the same or different. 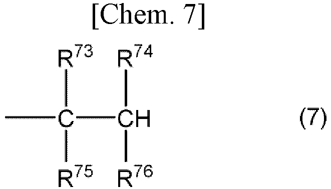 In the formula (7), R⁷³, R⁷⁴, R⁷⁵, and R⁷⁶ may be the same or different and each represents a hydrogen atom or a hydrocarbon group having 1 to 20 carbon atoms.
(II) A structure in which one terminal is represented by the formula (4) or (5) and the other terminal is represented by the following formula (8). 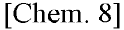 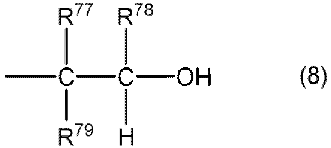 In the formula (8), R⁷⁷, R⁷⁸, and R⁷⁹ may be the same or different and each represents a hydrogen atom or a hydrocarbon group having 1 to 8 carbon atoms.

Among such polyvinyl ethers, polyvinyl ethers (P1), (P2), (P3), (P4), and (P5) listed below are particularly suitable as base oils.
(P1) A polyvinyl ether having a structure in which one terminal is represented by the formula (4) or (5) and the other terminal is represented by the formula (6) or (7), and in the formula (1), R⁵⁰, R⁵¹, and R⁵² are all hydrogen atoms, m is an integer of 0 to 4, R⁵³ is a divalent hydrocarbon group having 2 to 4 carbon atoms, and R⁵⁴ is a hydrocarbon group having 1 to 20 carbon atoms.
(P2) A polyvinyl ether having only structural units represented by the formula (1), a structure in which one terminal is represented by the formula (4) and the other terminal is represented by the formula (6), and in the formula (1), R⁵⁰, R⁵¹, and R⁵² are all hydrogen atoms, m is an integer of 0 to 4, R⁵³ is a divalent hydrocarbon group having 2 to 4 carbon atoms, and R⁵⁴ is a hydrocarbon group having 1 to 20 carbon atoms.
(P3) A polyvinyl ether having a structure in which one terminal is represented by the formula (4) or (5) and the other terminal is represented by the formula (8), and in the formula (1), R⁵⁰, R⁵¹, and R⁵² are all hydrogen atoms, m is an integer of 0 to 4, R⁵³ is a divalent hydrocarbon group having 2 to 4 carbon atoms, and R⁵⁴ is a hydrocarbon group having 1 to 20 carbon atoms.
(P4) A polyvinyl ether having only structural units represented by the formula (1), a structure in which one terminal is represented by the formula (5) and the other terminal is represented by the formula (8), and in the formula (1), R⁵⁰, R⁵¹, and R⁵² are all hydrogen atoms, m is an integer of 0 to 4, R⁵³ is a divalent hydrocarbon group having 2 to 4 carbon atoms, and R⁵⁴ is a hydrocarbon group having 1 to 20 carbon atoms.
(P5) A polyvinyl ether having structural units in which R⁵⁴ in the formula (1) is a hydrocarbon group having 1 to 3 carbon atoms and structural units in which R⁵⁴ is a hydrocarbon group having 3 to 20 carbon atoms, selected from any of (P1), (P2), (P3), and (P4).

The weight average molecular weight of the polyvinyl ether is preferably 500 or more, more preferably 600 or more, and preferably 3000 or less, more preferably 2000 or less, and even more preferably 1500 or less. When the weight average molecular weight of polyvinyl ether is 500 or more, the refrigerating machine oil exhibits excellent lubricity under coexistence with the refrigerant. When the weight average molecular weight is 3000 or less, the composition range showing compatibility with the refrigerant under low-temperature conditions becomes wider, and poor lubrication of the refrigerant compressor and inhibition of heat exchange in the evaporator can be suppressed.

The number average molecular weight of the polyvinyl ether is preferably 500 or more, more preferably 600 or more, and preferably 3000 or less, more preferably 2000 or less, and even more preferably 1500 or less. When the number average molecular weight of the polyvinyl ether is 500 or more, the refrigerating machine oil exhibits excellent lubricity under coexistence with the refrigerant. When the number average molecular weight is 3000 or less, the composition range showing compatibility with the refrigerant under low-temperature conditions becomes wider, and poor lubrication of the refrigerant compressor and inhibition of heat exchange in the evaporator can be suppressed.

The weight average molecular weight and number average molecular weight of the polyvinyl ether refer to the weight average molecular weight and number average molecular weight (polystyrene (standard sample) equivalent values) obtained by GPC analysis. The weight average molecular weight and number average molecular weight can be measured, for example, as follows.

Using chloroform as a solvent, a solution with a polyvinyl ether concentration of 1% by mass is prepared by dilution. The solution is analyzed using a GPC device (Waters Alliance 2695). The solvent flow rate is 1 ml/min, a column capable of analyzing molecular weights from 100 to 10000 is used, and analysis is performed using a refractive index detector. The relationship between column retention time and molecular weight is determined using a polystyrene standard with a known molecular weight, and a calibration curve is created separately. The molecular weight of the sample is determined from the obtained retention time.

The unsaturation degree of the polyvinyl ether is preferably 0.04 meq/g or less, more preferably 0.03 meq/g or less, and even more preferably 0.02 meq/g or less. The peroxide value of the polyvinyl ether is preferably 10.0 meq/kg or less, more preferably 5.0 meq/kg or less, and even more preferably 1.0 meq/kg or less. The carbonyl value of the polyvinyl ether is preferably 100 ppm by weight or less, more preferably 50 ppm by weight or less, and even more preferably 20 ppm by weight or less. The hydroxyl value of the polyvinyl ether is preferably 10 mg KOH/g or less, more preferably 5 mg KOH/g or less, and even more preferably 3 mg KOH/g or less.

The unsaturation degree, peroxide value, and carbonyl value in this specification refer to the values measured by the standard oil and fat analysis test methods established by the Japan Oil Chemists' Society. Specifically, the unsaturation degree in this specification refers to the value (meq/g) obtained by reacting the sample with Wijs solution (ICl-acetic acid solution), leaving it in the dark, then reducing the excess ICl to iodine, titrating the iodine with sodium thiosulfate to calculate the iodine value, and converting this iodine value to vinyl equivalents. The peroxide value in this specification refers to the value (meq/kg) obtained by adding potassium iodide to the sample, titrating the resulting free iodine with sodium thiosulfate, and converting the free iodine to milliequivalents per kilogram of the sample. The carbonyl value in this specification refers to the value (ppm by weight) obtained by reacting the sample with 2,4-dinitrophenylhydrazine to produce a colored quinonoid ion, measuring the absorbance of the sample at 480 nm, and converting the carbonyl amount based on a calibration curve obtained using cinnamaldehyde as a standard substance. The hydroxyl value in this specification refers to the hydroxyl value measured according to JIS K0070:1992.

Examples of the polyalkylene glycol include compounds having one or more oxyalkylenes such as an oxyethylene, an oxypropylene, and an oxybutylene as structural units, such as a polyethylene glycol, a polypropylene glycol, a polybutylene glycol, or their etherified or acylated derivatives. The polyalkylene glycol having these structural units can be obtained by ring-opening polymerization of monomers such as ethylene oxide, propylene oxide, and butylene oxide.

Examples of the polyalkylene glycol include compounds represented by the following formula (9):

R^{α}-[(OR^{β})_{f}-OR^{γ}]_{g} (9)

wherein R^{α} represents a hydrogen atom, a hydrocarbon group having 1 to 20 carbon atoms, an acyl group having 2 to 10 carbon atoms, or a residue of a compound having 2 to 8 hydroxyl groups, R^{β} represents an alkylene group having 2 to 4 carbon atoms, R^{γ} represents a hydrogen atom, a hydrocarbon group having 1 to 20 carbon atoms, or an acyl group having 2 to 10 carbon atoms, f represents an integer of 1 to 80, and g represents an integer of 1 to 8.

The hydrocarbon groups represented by R^{α} and R^{γ} may be alkyl groups or hydrocarbon groups having a cyclic structure, and the alkyl groups may be linear or branched. The hydrocarbon groups having a cyclic structure may be aromatic compounds or alicyclic compounds. The number of carbon atoms of the hydrocarbon groups is preferably 1 to 10, more preferably 1 to 6. When the number of carbon atoms of the hydrocarbon groups is 10 or less, the refrigerating machine oil tends to exhibit excellent compatibility with the refrigerant.

The alkyl group portion of the acyl groups represented by R^{α} and R^{γ} may be linear, branched, or cyclic. The number of carbon atoms of the acyl groups is preferably 2 to 10, more preferably 2 to 6. When the number of carbon atoms of the acyl groups is 10 or less, the refrigerating machine oil tends to exhibit excellent compatibility with the refrigerant and is less likely to undergo phase separation.

When the groups represented by R^{α} and R^{γ} are both alkyl groups or both acyl groups, the groups represented by R^{α} and R^{γ} may be the same or different. When g is 2 or more, the groups represented by R^{α} and R^{γ} in the same molecule may be the same or different.

When the group represented by R^{α} is a residue of a compound having 2 to 8 hydroxyl groups, the compound may be linear or cyclic.

At least one of R^{α} and R^{γ} is preferably an alkyl group, more preferably an alkyl group having 1 to 4 carbon atoms, and even more preferably a methyl group, from the viewpoint of excellent compatibility. From the viewpoint of excellent thermal and chemical stability, both R^{α} and R^{γ} are preferably alkyl groups, more preferably alkyl groups having 1 to 4 carbon atoms, and even more preferably methyl groups. From the viewpoint of ease of manufacture and cost, it is preferable that one of R^{α} and R^{γ} is an alkyl group (more preferably an alkyl group having 1 to 4 carbon atoms) and the other is a hydrogen atom, more preferably one is a methyl group and the other is a hydrogen atom. From the viewpoint of excellent lubricity and sludge solubility, both R^{α} and R^{γ} are preferably hydrogen atoms.

R^{β} represents an alkylene group having 2 to 4 carbon atoms. Specific examples of such alkylene groups include ethylene groups, propylene groups, and butylene groups. Examples of oxyalkylene units represented by OR^{β} include oxyethylene units, oxypropylene units, and oxybutylene units. The oxyalkylene units represented by (OR^{β})_{f} may be composed of one type of oxyalkylene unit or two or more types of oxyalkylene units.

From the viewpoint of excellent compatibility with the refrigerant and viscosity-temperature characteristics, the polyalkylene glycol represented by the formula (9) is preferably a copolymer containing oxyethylene units (EO) and oxypropylene units (PO). In this case, from the viewpoint of excellent seizure load and viscosity-temperature characteristics, the proportion of oxyethylene units to the total of oxyethylene units and oxypropylene units (EO/(PO+EO)) is preferably 0.1 to 0.8, more preferably 0.3 to 0.6. From the viewpoint of excellent hygroscopicity and thermal and oxidative stability, EO/(PO+EO) is preferably 0 to 0.5, more preferably 0 to 0.2, and even more preferably 0 (i.e., a homopolymer of propylene oxide).

f represents the number of repetitions (degree of polymerization) of the oxyalkylene unit OR^{β} and is an integer of 1 to 80. g is an integer of 1 to 8. For example, when R^{α} is an alkyl group or an acyl group, g is 1. When R^{α} is a residue of a compound having 2 to 8 hydroxyl groups, g is the number of hydroxyl groups in the compound.

In the polyalkylene glycol represented by the formula (9), the average value of the product of f and g (f×g) is preferably 6 to 80 from the viewpoint of balancing the required performance as a refrigerating machine oil.

The weight average molecular weight of the polyalkylene glycol is preferably 500 or more, more preferably 600 or more, and preferably 3000 or less, more preferably 2000 or less, and even more preferably 1500 or less. When the weight average molecular weight of the polyalkylene glycol is 500 or more, the refrigerating machine oil exhibits excellent lubricity under coexistence with the refrigerant. When the weight average molecular weight is 3000 or less, the composition range showing compatibility with the refrigerant under low-temperature conditions becomes wider, and poor lubrication of the refrigerant compressor and inhibition of heat exchange in the evaporator can be suppressed.

The number average molecular weight of the polyalkylene glycol is preferably 500 or more, more preferably 600 or more, and preferably 3000 or less, more preferably 2000 or less, and even more preferably 1500 or less. When the number average molecular weight of the polyalkylene glycol is 500 or more, the refrigerating machine oil exhibits excellent lubricity under coexistence with the refrigerant. When the number average molecular weight is 3000 or less, the composition range showing compatibility with the refrigerant under low-temperature conditions becomes wider, and poor lubrication of the refrigerant compressor and inhibition of heat exchange in the evaporator can be suppressed.

The weight average molecular weight and number average molecular weight of the polyalkylene glycol refer to the weight average molecular weight and number average molecular weight (polypropylene glycol (standard sample) equivalent values) obtained by GPC analysis. The weight average molecular weight and number average molecular weight can be measured, for example, as follows.

Using chloroform as a solvent, a solution with a polyalkylene glycol concentration of 1% by mass is prepared by dilution. The solution is analyzed using a GPC device (Waters Alliance 2695). The solvent flow rate is 1 ml/min, a column capable of analyzing molecular weights from 100 to 10000 is used, and analysis is performed using a refractive index detector. The relationship between column retention time and molecular weight is determined using a polyalkylene glycol standard with a known molecular weight, and a calibration curve is created separately. The molecular weight of the sample is determined from the obtained retention time.

The hydroxyl value of the polyalkylene glycol is preferably 100 mg KOH/g or less, more preferably 50 mg KOH/g or less, even more preferably 30 mg KOH/g or less, and particularly preferably 10 mg KOH/g or less.

The polyalkylene glycol can be synthesized using known methods (e.g., "Alkylene Oxide Polymers," Manta Shibata et al., Kaibundo, November 20, 1990). For example, by adding one or more types of alkylene oxides to an alcohol (R^{α}OH; R^{α} has the same definition as in the formula (9)) and further etherifying or esterifying the terminal hydroxyl groups, polyalkylene glycol represented by the formula (9) can be obtained. When two or more types of alkylene oxides are used in the above manufacturing process, the resulting polyalkylene glycol may be a random copolymer or a block copolymer. From the viewpoint of excellent oxidative stability and lubricity, a block copolymer is preferable, and from the viewpoint of excellent low-temperature fluidity, a random copolymer is preferable.

The unsaturation degree of the polyalkylene glycol is preferably 0.04 meq/g or less, more preferably 0.03 meq/g or less, and even more preferably 0.02 meq/g or less. The peroxide value is preferably 10.0 meq/kg or less, more preferably 5.0 meq/kg or less, and even more preferably 1.0 meq/kg or less. The carbonyl value is preferably 100 ppm by weight or less, more preferably 50 ppm by weight or less, and even more preferably 20 ppm by weight or less.

The polyol ester includes an ester of a polyhydric alcohol and a fatty acid. The fatty acid is preferably a saturated fatty acid. The number of carbon atoms of the fatty acids is preferably 4 to 20, more preferably 4 to 18, even more preferably 4 to 9, and particularly preferably 5 to 9. Polyol ester may be a partial ester in which some of the hydroxyl groups of the polyhydric alcohol are not esterified and remain as hydroxyl groups, a complete ester in which all the hydroxyl groups are esterified, or a mixture of partial esters and complete esters. The hydroxyl value of polyol ester is preferably 10 mg KOH/g or less, more preferably 5 mg KOH/g or less, and even more preferably 3 mg KOH/g or less.

The proportion of fatty acids having 4 to 20 carbon atoms in the fatty acids constituting the polyol ester is preferably 20 to 100% by mole, more preferably 50 to 100% by mole, even more preferably 70 to 100% by mole, and particularly preferably 90 to 100% by mole.

Specific examples of the fatty acid having 4 to 20 carbon atoms include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and eicosanoic acid. These fatty acids may be linear or branched. The fatty acids are preferably branched fatty acids having branches at the α-position and/or β-position, more preferably selected from 2-methylpropanoic acid, 2-methylbutanoic acid, 2-methylpentanoic acid, 2-methylhexanoic acid, 2-ethylpentanoic acid, 2-methylheptanoic acid, 2-ethylhexanoic acid, 3,5,5-trimethylhexanoic acid, and 2-ethylhexadecanoic acid, and even more preferably selected from 2-methylpropanoic acid and 3,5,5-trimethylhexanoic acid.

The fatty acid preferably contains a branched fatty acid having 4 to 9 carbon atoms. The proportion of the branched fatty acid having 4 to 9 carbon atoms in the fatty acid is preferably 20 to 100% by mole, more preferably 50 to 100% by mole, even more preferably 70 to 100% by mole, and particularly preferably 90 to 100% by mole.

The fatty acid may contain a fatty acid other than the fatty acid having 4 to 20 carbon atoms. The fatty acid other than the fatty acid having 4 to 20 carbon atoms may be a fatty acid having 21 to 24 carbon atoms. Examples of the fatty acid having 21 to 24 carbon atoms include heneicosanoic acid, docosanoic acid, tricosanoic acid, and tetracosanoic acid, which may be linear or branched.

The polyhydric alcohol constituting the polyol ester is preferably a polyhydric alcohol having 2 to 6 hydroxyl groups. The number of carbon atoms of the polyhydric alcohol is preferably 4 to 12, more preferably 5 to 10. The polyhydric alcohol is preferably a hindered alcohol such as neopentyl glycol, trimethylol ethane, trimethylol propane, trimethylol butane, di-(trimethylol propane), tri-(trimethylol propane), pentaerythritol, and dipentaerythritol, and more preferably pentaerythritol, dipentaerythritol, or a mixed alcohol of pentaerythritol and dipentaerythritol, from the viewpoint of excellent compatibility with the refrigerant and hydrolytic stability.

The polyol ester may contain a complex ester. The complex ester may be a complex ester synthesized by the following methods (C1) or (C2).
(C1) A method of synthesizing an ester intermediate in which some of the carboxyl groups of a polybasic acid remain unesterified by adjusting the molar ratio of a polyhydric alcohol and a polybasic acid, and then esterifying the remaining carboxyl groups with a monohydric alcohol.
(C2) A method of synthesizing an ester intermediate in which some of the hydroxyl groups of a polyhydric alcohol remain unesterified by adjusting the molar ratio of a polyhydric alcohol and a polybasic acid, and then esterifying the remaining hydroxyl groups with a monocarboxylic fatty acid.

The complex ester obtained by the method (C1) is superior in stability compared to the complex ester obtained by the method (C2) because it can suppress the generation of strong acids due to hydrolysis when used as refrigerating machine oils. Therefore, the complex ester is preferably the complex ester obtained by the method (C1) with higher stability.

The complex ester is preferably an ester synthesized from at least one polyhydric alcohol selected from polyhydric alcohols having 2 to 4 hydroxyl groups, at least one polybasic acid selected from polybasic acids having 6 to 12 carbon atoms, at least one monohydric alcohol selected from monohydric alcohols having 4 to 18 carbon atoms, and at least one monocarboxylic fatty acid selected from monocarboxylic fatty acids having 2 to 12 carbon atoms.

Examples of the polyhydric alcohol having 2 to 4 hydroxyl groups include neopentyl glycol, trimethylol propane, and pentaerythritol. Polyhydric alcohols having 2 to 4 hydroxyl groups are preferably selected from neopentyl glycol and trimethylol propane from the viewpoint of ensuring suitable viscosity when using complex esters as base oils and obtaining good low-temperature properties, and more preferably neopentyl glycol from the viewpoint of wide viscosity adjustment.

From the viewpoint of excellent lubricity, the polyhydric alcohol constituting the complex ester may further contain a divalent alcohol having 2 to 10 carbon atoms other than neopentyl glycol, in addition to the polyhydric alcohol having 2 to 4 hydroxyl groups. Examples of the divalent alcohol having 2 to 10 carbon atoms other than neopentyl glycol include ethylene glycol, propanediol, butanediol, pentanediol, hexanediol, 2-methyl-1,3-propanediol, 3-methyl-1,5-pentanediol, and 2,2-diethyl-1,3-pentanediol. From the viewpoint of excellent base oil properties, the butanediol is preferable. Examples of the butanediol include 1,2-butanediol, 1,3-butanediol, 1,4-butanediol, and 2,3-butanediol. From the viewpoint of obtaining good properties, the butanediol is preferably selected from 1,3-butanediol and 1,4-butanediol. The amount of the divalent alcohol having 2 to 10 carbon atoms other than neopentyl glycol is preferably 1.2 mol or less, more preferably 0.8 mol or less, and even more preferably 0.4 mol or less per 1 mol of the polyhydric alcohol having 2 to 4 hydroxyl groups.

Examples of the polybasic acid having 6 to 12 carbon atoms include adipic acid, pimelic acid, suberic acid, azelaic acid, sebacic acid, phthalic acid, and trimellitic acid. From the viewpoint of balancing the properties of the synthesized ester and ease of availability, the polybasic acids are preferably selected from adipic acid and sebacic acid, and more preferably adipic acid. The amount of the polybasic acid having 6 to 12 carbon atoms is preferably 0.4 mol to 4 mol, more preferably 0.5 mol to 3 mol, and even more preferably 0.6 mol to 2.5 mol per 1 mol of polyhydric alcohol having 2 to 4 hydroxyl groups.

Examples of the monohydric alcohol having 4 to 18 carbon atoms include butanol, pentanol, hexanol, heptanol, octanol, nonanol, decanol, dodecanol, and oleyl alcohol. These monohydric alcohols may be linear or branched. From the viewpoint of balancing properties, the monohydric alcohols having 4 to 18 carbon atoms are preferably monohydric alcohols having 6 to 10 carbon atoms, more preferably monohydric alcohols having 8 to 10 carbon atoms. From the viewpoint of obtaining good low-temperature properties, the monohydric alcohols are preferably selected from 2-ethylhexanol and 3,5,5-trimethylhexanol.

Examples of the monocarboxylic fatty acid having 2 to 12 carbon atoms include acetic acid, propionic acid, butanoic acid, pentanoic acid, hexanoic acid, heptanoic acid, octanoic acid, nonanoic acid, decanoic acid, and dodecanoic acid. These monocarboxylic fatty acids may be linear or branched. From the viewpoint of low-temperature properties, the monocarboxylic fatty acid having 2 to 12 carbon atoms is preferably a monocarboxylic fatty acid having 8 to 10 carbon atoms, and more preferably 2-ethylhexanoic acid and 3,5,5-trimethylhexanoic acid.

The kinematic viscosity at 40°C of the base oil is preferably 3 mm²/s or higher, more preferably 4 mm²/s or higher, and even more preferably 5 mm²/s or higher, and preferably 1000 mm²/s or lower, more preferably 500 mm²/s or lower, and even more preferably 400 mm²/s or lower. The kinematic viscosity at 100°C of the base oil is preferably 1 mm²/s or higher, more preferably 2 mm²/s or higher, and preferably 100 mm²/s or lower, more preferably 50 mm²/s or lower. The kinematic viscosity in this specification refers to the kinematic viscosity measured according to JIS K2283:2000.

The content of the base oil may be 50% by mass or more, 60% by mass or more, 70% by mass or more, 80% by mass or more, or 90% by mass or more, based on the total amount of the refrigerating machine oil.

The refrigerating machine oil may further contain one or more additives in addition to the base oil. The content of the additive (the total content of the additives when the refrigerating machine oil contains two or more additives) may be, for example, 0.01% by mass or more, 0.1% by mass or more, or 1% by mass or more, and may be 15% by mass or more, 10% by mass or less, or 5% by mass or less, based on the total amount of the refrigerating machine oil.

The refrigerating machine oil may further contain, for example, an acid scavenger, an antioxidant, and an antiwear agent. The refrigerating machine oil preferably contains an acid scavenger, an antioxidant, and an antiwear agent.

Examples of the acid scavengers include epoxy-based acid scavengers and carbodiimide-based acid scavengers. Examples of epoxy-based acid scavengers include glycidyl ester-based acid scavengers, glycidyl ether-based acid scavengers, α-olefin oxide-based acid scavengers, diepoxy-based acid scavengers, and alicyclic epoxy-based acid scavengers. These acid scavengers can be used alone or in combination of two or more types.

The refrigerating machine oil preferably contains at least one acid scavenger selected from the group consisting of glycidyl ester-based acid scavengers and glycidyl ether-based acid scavengers, and may further contain at least one acid scavenger selected from the group consisting of glycidyl ester-based acid scavengers and glycidyl ether-based acid scavengers and a carbodiimide-based acid scavenger as needed.

The content of the acid scavenger may be 0.01% by mass or more, 0.03% by mass or more, or 0.1% by mass or more, and may be 5% by mass or less, 3% by mass or less, or 1% by mass, based on the total amount of the refrigerating machine oil. The content of the epoxy-based acid scavenger may be 0.01% by mass or more or 0.1% by mass or more, and may be 5% by mass or less or 3% by mass or less, based on the total amount of the refrigerating machine oil. The content of the carbodiimide-based acid scavenger may be 0.01% by mass or more or 0.03% by mass or more, and may be 5% by mass or less, 3% by mass or less, or 1% by mass or less, based on the total amount of the refrigerating machine oil.

When the refrigerating machine oil contains an acid scavenger, suitable stability under coexistence with a refrigerant containing trans-1,2-difluoroethylene (HFO-1132(E)) and 2,3,3,3-tetrafluoropropene (HFO-1234yf) can be obtained. However, under coexistence with the refrigerant, the acid scavenger in the refrigerating machine oil tends to be consumed more easily compared to coexistence with a refrigerant containing only HFO-1234yf. Therefore, it may be effective to increase the content of the acid scavenger. Specifically, the amount of acid scavenger contained in the refrigerating machine oil may be, for example, 1 time or more, 1.2 times or more, 1.4 times or more, 1.5 times or more, or 2 times or more, and may be 10 times or less, 5 times or less, 3 times or less, or 2 times or less compared to the amount of acid scavenger in the refrigerating machine oil used under coexistence with a refrigerant containing only HFO-1234yf.

The refrigerating machine oil may further contain, for example, an antioxidant. Examples of the antioxidants include phenol-based antioxidants, amine-based antioxidants, phosphorus-based antioxidants, and sulfur-based antioxidants. Examples of the phenol-based antioxidants include 2,6-di-tert-butyl-p-cresol (DBPC), 2,6-di-tert-butylphenol, and 4,4'-methylenebis(2,6-di-tert-butylphenol). Examples of the amine-based antioxidants include naphthylamine and diphenylamine. These antioxidants can be used alone or in combination of two or more types. The content of the antioxidant may be preferably 0.01% by mass or more or 0.1% by mass or more, and may be 5% by mass or less or 3% by mass or less, based on the total amount of the refrigerating machine oil.

The refrigerating machine oil may further contain, for example, a phosphorus-containing antiwear agent (also called a phosphorus-containing extreme pressure agent). Examples of the phosphorus-containing antiwear agents (extreme pressure agents) include phosphorus antiwear agents (phosphorus extreme pressure agents) and phosphorus-sulfur antiwear agents (phosphorus-sulfur extreme pressure agents). Examples of the phosphorus antiwear agents include phosphate esters, acidic phosphate esters, amine salts of acidic phosphate esters, chlorinated phosphate esters, and phosphite esters. Examples of the phosphate esters include a triaryl phosphate such as tricresyl phosphate (TCP), triphenyl phosphate (TPP), an alkylated triphenyl phosphate, and a trialkyl phosphate. Examples of phosphorus-sulfur antiwear agents include triphenyl phosphorothionate (TPPT). These antiwear agents (extreme pressure agents) can be used alone or in combination of two or more types. The content of the phosphorus-containing antiwear agent may be 0.01% by mass or more or 0.1% by mass or more, and may be 5% by mass or less or 3% by mass or less, based on the total amount of the refrigerating machine oil.

When the refrigerating machine oil contains the above phosphorus-containing antiwear agent, the stability of the working fluid composition containing the refrigerating machine oil and the refrigerant may be affected depending on the amount and conditions of mixed water and air. In this case, by containing an antioxidant (preferably a phenol-based antioxidant) in the refrigerating machine oil at, for example, 0.1% by mass or more and adjusting the content of the phosphorus-containing antiwear agent and the epoxy-based acid scavenger, a certain stability improvement effect can be expected.

When the refrigerating machine oil contains the phosphorus-containing antiwear agent, antioxidant, and epoxy-based acid scavenger, the content of the antioxidant (preferably a phenol-based antioxidant) is preferably 0.1% by mass or more, 0.2% by mass or more, 0.3% by mass or more, or 0.5% by mass or more, and preferably 3% by mass or less. The total content of the epoxy-based acid scavenger, antioxidant (preferably a phenol-based antioxidant), and phosphorus-containing antiwear agent is preferably 0.5% by mass or more, 0.9% by mass or more, or 1.5% by mass or more, and may be 10% by mass or less, 5% by mass or less, or 4% by mass or less, based on the total amount of the refrigerating machine oil.

The refrigerating machine oil may further contain, for example, a metal deactivator. Examples of the metal deactivators include benzotriazole and benzotriazole derivatives. The content of the metal deactivator may be 0.0001% by mass or more, 0.0005% by mass or more, or 0.0008% by mass or more, and may be 1% by mass or less, 0.1% by mass or less, or 0.01% by mass or less, based on the total amount of the refrigerating machine oil.

The refrigerating machine oil may further contain, for example, a friction modifier (also called an oiliness agent). Examples of the friction modifiers include ester friction modifiers, amine friction modifiers, ether friction modifiers, alcohol friction modifiers, and acid friction modifiers. The content of the friction modifier may be 0.01% by mass or more, 0.05% by mass or more, or 0.1% by mass or more, and may be 10% by mass or less, 5% by mass or less, or 1% by mass or less, based on the total amount of the refrigerating machine oil.

The refrigerating machine oil may further contain an additional additive. Examples of the additional additive include an antifoaming agent, a viscosity index improver, a pour point depressant, a detergent dispersant, and a rust inhibitor.

The kinematic viscosity at 40°C of the refrigerating machine oil is preferably 3 mm²/s or higher, 4 mm²/s or higher, or 5 mm²/s or higher, and may be 1000 mm²/s or lower, 500 mm²/s or lower, or 400 mm²/s or lower. The kinematic viscosity at 100°C of the refrigerating machine oil is preferably 1 mm²/s or higher or 2 mm²/s or higher, and may be 100 mm²/s or lower or 50 mm²/s or lower.

The acid value of the refrigerating machine oil is preferably 0.1 mg KOH/g or less, more preferably 0.05 mg KOH/g or less, or 0.02 mg KOH/g or less. The acid value in this specification refers to the acid value measured according to JIS K2501:2003 "Petroleum Products and Lubricating Oils - Neutralization Test Method."

The hydroxyl value of the refrigerating machine oil is preferably 40 mg KOH/g or less, more preferably 20 mg KOH/g or less, 10 mg KOH/g or less, or 5 mg KOH/g or less, and may be 0 mg KOH/g or more or 1 mg KOH/g or more.

The peroxide value of the refrigerating machine oil is preferably 10.0 meq/kg or less, more preferably 5.0 meq/kg or less, and even more preferably 1.0 meq/kg or less.

The volume resistivity of the refrigerating machine oil is preferably 1×10⁻⁶ TΩ·m or higher, more preferably 1×10⁻⁴ TΩ·m or higher, 1×10⁻³ TΩ·m or higher, 1×10⁻² TΩ·m or higher, 1×10⁻¹ TΩ·m or higher, or 1×10 TΩ·m or higher. The volume resistivity in this specification refers to the value measured at 25°C according to JIS C2101:1999 "Electrical Insulating Oil Test Method."

More specific examples of the refrigerating machine oils that are suitable for use with refrigerants containing HFO-1132(E) and HFO-1234yf as described above are shown below. The abbreviations in the table represent the respective components. The values in parentheses in the table represent the range of content (% by mass) of each component based on the total amount of the refrigerating machine oil, and the content of the base oil is the remainder. For example, composition example 1 means a composition containing 0.1 to 2% by mass of antioxidant DBPC and the remainder being base oil Es1.

### [Base oil]

Es1: Ester of pentaerythritol (PE)/dipentaerythritol (DiPE) and 2-ethylhexanoic acid (iC8 acid)/3,5,5-trimethylhexanoic acid (iC9 acid)
PE/DiPE (molar ratio): 50/50 to 100/0 or 70/30 to 95/5
iC8 acid/iC9 acid (molar ratio): 20/80 to 80/20 or 40/60 to 60/40
Es2: Ester of pentaerythritol (PE)/dipentaerythritol (DiPE) and 2-methylpropanoic acid (iC4 acid)/iC8 acid and/or iC9 acid
PE/DiPE (molar ratio): 50/50 to 100/0 or 70/30 to 95/5
iC4 acid/iC8 acid and/or iC9 acid (molar ratio): 20/80 to 80/20 or 70/30 to 30/70
Es3: Ester of pentaerythritol (PE)/dipentaerythritol (DiPE) and 2-methylbutanoic acid (iC5 acid)/iC8 acid and/or iC9 acid
PE/DiPE (molar ratio): 50/50 to 100/0 or 70/30 to 95/5
iC5 acid and/or iC6 acid/iC8 acid and/or iC9 acid (molar ratio): 20/80 to 80/20 or 70/30 to 30/70
Es4: Ester of pentaerythritol (PE)/dipentaerythritol (DiPE) and n-pentanoic acid (nC5 acid) and/or n-heptanoic acid (nC7 acid)/iC8 acid and/or iC9 acid
PE/DiPE (molar ratio): 50/50 to 100/0 or 70/30 to 95/5
nC5 acid and/or nC7 acid/iC8 acid and/or iC9 acid (molar ratio): 20/80 to 80/20 or 70/30 to 30/70
Es5: Mixed ester of the following Es6 (complex ester), or mixed ester of Es6 and the ester of pentaerythritol/fatty acid ester having 4 to 9 carbon atoms of any of Es1 to Es4
Es6/Es1 to Es4 (mass ratio): 100/0 to 99/1, 5/95 to 50/50 or 10/90 to 40/60
Es6: Complex ester of neopentyl glycol, or neopentyl glycol and butanediol, adipic acid, and a monohydric fatty alcohol having 4 to 9 carbon atoms or a fatty acid having 4 to 9 carbon atoms

### [Antioxidant]

DBPC: 2,6-di-tert-butyl-p-cresol

### [Phosphorus-containing antiwear agent]

TAP: Triaryl/trialkyl phosphate (triphenyl phosphate, tricresyl phosphate, tri(t-butylphenyl) phosphate, tri(propylphenyl) phosphate, tributyl phosphate, or trioctyl phosphate)

### [Acid scavenger]

GEs: Glycidyl ester (glycidyl neodecanoate, glycidyl 2,2-dimethyloctanoate, or glycidyl benzoate)
GEt: Glycidyl ether (2-ethylhexyl glycidyl ether or 4-tert-butylphenyl glycidyl ether)
CyE: Alicyclic epoxy (cyclohexene oxide or 3',4'-epoxycyclohexylmethyl-3,4-epoxycyclohexanecarboxylate)
Ole: α-olefin oxide (α-olefin oxide having 12 and/or 14 carbon atoms)
CDI: Carbodiimide (diisopropyl carbodiimide, bis(2,6-diisopropylphenyl) carbodiimide, or bis(2,6-diisobutylphenyl) carbodiimide)

**[Table 1]**

| Composition example | Base oil | Antioxidant | Phosphorus-containing antiwear agent | Acid scavenger |
|---|---|---|---|---|
| 1 | Es1 | DBPC(0.1-2) | - | - |
| 2 | Es1 | DBPC(0.1-2) | TAP(0.5-3) | - |
| 3 | Es1 | DBPC(0.1-2) | TAP(0.5-3) | GEs(0.1-5) |
| 4 | Es1 | DBPC(0.1-2) | TAP(0.5-3) | GEs(1-2) |
| 5 | Es1 | DBPC(0.1-2) | TAP(0.5-3) | GEt(0.1-5) |
| 6 | Es1 | DBPC(0.1-2) | TAP(0.5-3) | GEt(1-2) |
| 7 | Es1 | DBPC(0.1-2) | TAP(0.5-3) | CyE(0.1-5) |
| 8 | Es1 | DBPC(0.1-2) | TAP(0.5-3) | CyE(1-2) |
| 9 | Es1 | DBPC(0. 1-2) | TAP(0.5-3) | Ole(0.1-5) |
| 10 | Es1 | DBPC(0.1-2) | TAP(0.5-3) | Ole(1-4) |
| 11 | Es1 | DBPC(0.1-2) | TAP(0.5-3) | CDI(0.01-1) |
| 12 | Es1 | DBPC(0.1-2) | TAP(0.5-3) | CDI(0.05-0.5) |
| 13 | Es1 | DBPC(0.1-2) | TAP(0.5-3) | GEs(0.1-5)+CDI(0.01-1) |
| 14 | Es1 | DBPC(0.1-2) | TAP(0.5-3) | GEs(1-2)+CDI(0.01-1) |
| 15 | Es1 | DBPC(0.1-2) | TAP(0.5-3) | GEt(0.1-5)+CDI(0.01-1) |
| 16 | Es1 | DBPC(0.1-2) | TAP(0.5-3) | GEt(1-2)+CDI(0.01-1) |
| 17 | Es1 | DBPC(0.1-2) | TAP(0.5-3) | CyE(0.1-5)+CDI(0.01-1) |
| 18 | Es1 | DBPC(0.1-2) | TAP(0.5-3) | CyE(1-2)+CDI(0.01-1) |
| 19 | Es1 | DBPC(0.1-2) | TAP(0.5-3) | Ole(0.1-5)+CDI(0.01-1) |
| 20 | Es1 | DBPC(0.1-2) | TAP(0.5-3) | Ole(1-4)+CDI(0.01-1) |
| 21 | Es1 | DBPC(0.1-2) | TAP(0.5-3) | GEs(0.1-5)+ GEt(0.1-5) |
| 22 | Es1 | DBPC(0.1-2) | TAP(0.5-3) | GEs(0.1-5)+CyE(0.1-5) |
| 23 | Es1 | DBPC(0.1-2) | TAP(0.5-3) | GEs(0.1-5)+Ole(0.1-5) |
| 24 | Es1 | DBPC(0.1-2) | TAP(0.5-3) | GEs(0.1-5)+CDI(0.02-0.5) |
| 25 | Es1 | DBPC(0.1-2) | TAP(0.5-3) | GEt(0.1-5)+CyE(0.1-5) |
| 26 | Es1 | DBPC(0.1-2) | TAP(0.5-3) | GEt(0.1-5)+Ole(0.1-5) |
| 27 | Es1 | DBPC(0.1-2) | TAP(0.5-3) | GEt(0.1-5)+CDI(0.02-0.5) |
| 28 | Es1 | DBPC(0.1-2) | TAP(0.5-3) | CyE(0.1-5)+Ole(0.1-5) |
| 29 | Es1 | DBPC(0.1-2) | TAP(0.5-3) | CyE(0.1-5)+CDI(0.02-0.5) |
| 30 | Es1 | DBPC(0.1-2) | TAP(0.5-3) | Ole(0.1-5)+CDI(0.02-0.5) |

**[Table 2]**

| Composition example | Base oil | Antioxidant | Phosphorus-containing antiwear agent | Acid scavenger |
|---|---|---|---|---|
| 31 | Es1 | DBPC(0.1-2) | - | - |
| 32 | Es1 | DBPC(0.1-2) | TAP(1-2) | - |
| 33 | Es1 | DBPC(0.1-2) | TAP(1-2) | GEs(0.1-5) |
| 34 | Es1 | DBPC(0.1-2) | TAP(1-2) | GEs(1-2) |
| 35 | Es1 | DBPC(0.1-2) | TAP(1-2) | GEt(0.1-5) |
| 36 | Es1 | DBPC(0.1-2) | TAP(1-2) | GEt(1-2) |
| 37 | Es1 | DBPC(0.1-2) | TAP(1-2) | CyE(0.1-5) |
| 38 | Es1 | DBPC(0.1-2) | TAP(1-2) | CyE(1-2) |
| 39 | Es1 | DBPC(0.1-2) | TAP(1-2) | Ole(0.1-5) |
| 40 | Es1 | DBPC(0.1-2) | TAP(1-2) | Ole(1-4) |
| 41 | Es1 | DBPC(0.1-2) | TAP(1-2) | CDI(0.01-1) |
| 42 | Es1 | DBPC(0.1-2) | TAP(1-2) | CDI(0.05-0.5) |
| 43 | Es1 | DBPC(0.1-2) | TAP(1-2) | GEs(0.1-5)+CDI(0.01-1) |
| 44 | Es1 | DBPC(0.1-2) | TAP(1-2) | GEs(1-2)+CDI(0.01-1) |
| 45 | Es1 | DBPC(0.1-2) | TAP(1-2) | GEt(0.1-5)+CDI(0.01-1) |
| 46 | Es1 | DBPC(0.1-2) | TAP(1-2) | GEt(1-2)+CDI(0.01-1) |
| 47 | Es1 | DBPC(0.1-2) | TAP(1-2) | CyE(0.1-5)+CDI(0.01-1) |
| 48 | Es1 | DBPC(0.1-2) | TAP(1-2) | CyE(1-2)+CDI(0.01-1) |
| 49 | Es1 | DBPC(0.1-2) | TAP(1-2) | Ole(0.1-5)+CDI(0.01-1) |
| 50 | Es1 | DBPC(0.1-2) | TAP(1-2) | Ole(1-4)+CDI(0.01-1) |
| 51 | Es1 | DBPC(0.1-2) | TAP(1-2) | GEs(0.1-5)+GEt(0.1-5) |
| 52 | Es1 | DBPC(0.1-2) | TAP(1-2) | GEs(0.1-5)+CyE(0.1-5) |
| 53 | Es1 | DBPC(0.1-2) | TAP(1-2) | GEs(0.1-5)+Ole(0.1-5) |
| 54 | Es1 | DBPC(0.1-2) | TAP(1-2) | GEs(0.1-5)+CDI(0.02-0.5) |
| 55 | Es1 | DBPC(0.1-2) | TAP(1-2) | GEt(0.1-5)+CyE(0.1-5) |
| 56 | Es1 | DBPC(0.1-2) | TAP(1-2) | GEt(0.1-5)+Ole(0.1-5) |
| 57 | Es1 | DBPC(0.1-2) | TAP(1-2) | GEt(0.1-5)+CDI(0.02-0.5) |
| 58 | Es1 | DBPC(0.1-2) | TAP(1-2) | CyE(0.1-5)+Ole(0.1-5) |
| 59 | Es1 | DBPC(0.1-2) | TAP(1-2) | CyE(0.1-5)+CDI(0.02-0.5) |
| 60 | Es1 | DBPC(0.1-2) | TAP(1-2) | Ole(0.1-5)+CDI(0.02-0.5) |

**[Table 3]**

| Composition example | Base oil | Antioxidant | Phosphorus-containing antiwear agent | Acid scavenger |
|---|---|---|---|---|
| 61 | Es2 | DBPC(0.1-2) | - | - |
| 62 | Es2 | DBPC(0.1-2) | TAP(0.5-3) | - |
| 63 | Es2 | DBPC(0.1-2) | TAP(0.5-3) | GEs(0.1-5) |
| 64 | Es2 | DBPC(0.1-2) | TAP(0.5-3) | GEs(1-2) |
| 65 | Es2 | DBPC(0.1-2) | TAP(0.5-3) | GEt(0.1-5) |
| 66 | Es2 | DBPC(0.1-2) | TAP(0.5-3) | GEt(1-2) |
| 67 | Es2 | DBPC(0.1-2) | TAP(0.5-3) | CyE(0.1-5) |
| 68 | Es2 | DBPC(0.1-2) | TAP(0.5-3) | CyE(1-2) |
| 69 | Es2 | DBPC(0.1-2) | TAP(0.5-3) | Ole(0.1-5) |
| 70 | Es2 | DBPC(0.1-2) | TAP(0.5-3) | Ole(1-4) |
| 71 | Es2 | DBPC(0.1-2) | TAP(0.5-3) | CDI(0.01-1) |
| 72 | Es2 | DBPC(0.1-2) | TAP(0.5-3) | CDI(0.05-0.5) |
| 73 | Es2 | DBPC(0.1-2) | TAP(0.5-3) | GEs(0.1-5)+CDI(0.01-1) |
| 74 | Es2 | DBPC(0.1-2) | TAP(0.5-3) | GEs(1-2)+CDI(0.01-1) |
| 75 | Es2 | DBPC(0.1-2) | TAP(0.5-3) | GEt(0.1-5)+CDI(0.01-1) |
| 76 | Es2 | DBPC(0.1-2) | TAP(0.5-3) | GEt(1-2)+CDI(0.01-1) |
| 77 | Es2 | DBPC(0.1-2) | TAP(0.5-3) | CyE(0.1-5)+CDI(0.01-1) |
| 78 | Es2 | DBPC(0.1-2) | TAP(0.5-3) | CyE(1-2)+CDI(0.01-1) |
| 79 | Es2 | DBPC(0.1-2) | TAP(0.5-3) | Ole(0.1-5)+CDI(0.01-1) |
| 80 | Es2 | DBPC(0.1-2) | TAP(0.5-3) | Ole(1-4)+CDI(0.01-1) |
| 81 | Es2 | DBPC(0.1-2) | TAP(0.5-3) | GEs(0.1-5)+GEt(0.1-5) |
| 82 | Es2 | DBPC(0.1-2) | TAP(0.5-3) | GEs(0.1-5)+CyE(0.1-5) |
| 83 | Es2 | DBPC(0.1-2) | TAP(0.5-3) | GEs(0.1-5)+Ole(0.1-5) |
| 84 | Es2 | DBPC(0.1-2) | TAP(0.5-3) | GEs(0.1-5)+CDI(0.02-0.5) |
| 85 | Es2 | DBPC(0.1-2) | TAP(0.5-3) | GEt(0.1-5)+CyE(0.1-5) |
| 86 | Es2 | DBPC(0.1-2) | TAP(0.5-3) | GEt(0.1-5)+Ole(0.1-5) |
| 87 | Es2 | DBPC(0.1-2) | TAP(0.5-3) | GEt(0.1-5)+CDI(0.02-0.5) |
| 88 | Es2 | DBPC(0.1-2) | TAP(0.5-3) | CyE(0.1-5)+Ole(0.1-5) |
| 89 | Es2 | DBPC(0.1-2) | TAP(0.5-3) | CyE(0.1-5)+CDI(0.02-0.5) |
| 90 | Es2 | DBPC(0.1-2) | TAP(0.5-3) | Ole(0.1-5)+CDI(0.02-0.5) |

**[Table 4]**

| Composition example | Base oil | Antioxidant | Phosphorus-containing antiwear agent | Acid scavenger |
|---|---|---|---|---|
| 91 | Es2 | DBPC(0.1-2) | - | - |
| 92 | Es2 | DBPC(0.1-2) | TAP(1-2) | - |
| 93 | Es2 | DBPC(0.1-2) | TAP(1-2) | GEs(0.1-5) |
| 94 | Es2 | DBPC(0.1-2) | TAP(1-2) | GEs(1-2) |
| 95 | Es2 | DBPC(0.1-2) | TAP(1-2) | GEt(0.1-5) |
| 96 | Es2 | DBPC(0.1-2) | TAP(1-2) | GEt(1-2) |
| 97 | Es2 | DBPC(0.1-2) | TAP(1-2) | CyE(0.1-5) |
| 98 | Es2 | DBPC(0.1-2) | TAP(1-2) | CyE(1-2) |
| 99 | Es2 | DBPC(0.1-2) | TAP(1-2) | Ole(0.1-5) |
| 100 | Es2 | DBPC(0.1-2) | TAP(1-2) | Ole(1-4) |
| 101 | Es2 | DBPC(0.1-2) | TAP(1-2) | CDI(0.01-1) |
| 102 | Es2 | DBPC(0.1-2) | TAP(1-2) | CDI(0.05-0.5) |
| 103 | Es2 | DBPC(0.1-2) | TAP(1-2) | GEs(0.1-5)+CDI(0.01-1) |
| 104 | Es2 | DBPC(0.1-2) | TAP(1-2) | GEs(1-2)+CDI(0.01-1) |
| 105 | Es2 | DBPC(0.1-2) | TAP(1-2) | GEt(0.1-5)+CDI(0.01-1) |
| 106 | Es2 | DBPC(0.1-2) | TAP(1-2) | GEt(1-2)+CDI(0.01-1) |
| 107 | Es2 | DBPC(0.1-2) | TAP(1-2) | CyE(0.1-5)+CDI(0.01-1) |
| 108 | Es2 | DBPC(0.1-2) | TAP(1-2) | CyE(1-2)+CDI(0.01-1) |
| 109 | Es2 | DBPC(0.1-2) | TAP(1-2) | Ole(0.1-5)+CDI(0.01-1) |
| 110 | Es2 | DBPC(0.1-2) | TAP(1-2) | Ole(1-4)+CDI(0.01-1) |
| 111 | Es2 | DBPC(0.1-2) | TAP(1-2) | GEs(0.1-5)+GEt(0.1-5) |
| 112 | Es2 | DBPC(0.1-2) | TAP(1-2) | GEs(0.1-5)+CyE(0.1-5) |
| 113 | Es2 | DBPC(0.1-2) | TAP(1-2) | GEs(0.1-5)+Ole(0.1-5) |
| 114 | Es2 | DBPC(0.1-2) | TAP(1-2) | GEs(0.1-5)+CDI(0.02-0.5) |
| 115 | Es2 | DBPC(0.1-2) | TAP(1-2) | GEt(0.1-5)+CyE(0.1-5) |
| 116 | Es2 | DBPC(0.1-2) | TAP(1-2) | GEt(0.1-5)+Ole(0.1-5) |
| 117 | Es2 | DBPC(0.1-2) | TAP(1-2) | GEt(0.1-5)+CDI(0.02-0.5) |
| 118 | Es2 | DBPC(0.1-2) | TAP(1-2) | CyE(0.1-5)+Ole(0.1-5) |
| 119 | Es2 | DBPC(0.1-2) | TAP(1-2) | CyE(0.1-5)+CDI(0.02-0.5) |
| 120 | Es2 | DBPC(0.1-2) | TAP(1-2) | Ole(0.1-5)+CDI(0.02-0.5) |

**[Table 5]**

| Composition example | Base oil | Antioxidant | Phosphorus-containing antiwear agent | Acid scavenger |
|---|---|---|---|---|
| 121 | Es3 | DBPC(0.1-2) | - | - |
| 122 | Es3 | DBPC(0.1-2) | TAP(0.5-3) | - |
| 123 | Es3 | DBPC(0.1-2) | TAP(0.5-3) | GEs(0.1-5) |
| 124 | Es3 | DBPC(0.1-2) | TAP(0.5-3) | GEs(1-2) |
| 125 | Es3 | DBPC(0.1-2) | TAP(0.5-3) | GEt(0.1-5) |
| 126 | Es3 | DBPC(0.1-2) | TAP(0.5-3) | GEt(1-2) |
| 127 | Es3 | DBPC(0.1-2) | TAP(0.5-3) | CyE(0.1-5) |
| 128 | Es3 | DBPC(0.1-2) | TAP(0.5-3) | CyE(1-2) |
| 129 | Es3 | DBPC(0. 1-2) | TAP(0.5-3) | Ole(0.1-5) |
| 130 | Es3 | DBPC(0.1-2) | TAP(0.5-3) | Ole(1-4) |
| 131 | Es3 | DBPC(0.1-2) | TAP(0.5-3) | CDI(0.01-1) |
| 132 | Es3 | DBPC(0.1-2) | TAP(0.5-3) | CDI(0.05-0.5) |
| 133 | Es3 | DBPC(0.1-2) | TAP(0.5-3) | GEs(0.1-5)+CDI(0.01-1) |
| 134 | Es3 | DBPC(0.1-2) | TAP(0.5-3) | GEs(1-2)+CDI(0.01-1) |
| 135 | Es3 | DBPC(0.1-2) | TAP(0.5-3) | GEt(0.1-5)+CDI(0.01-1) |
| 136 | Es3 | DBPC(0.1-2) | TAP(0.5-3) | GEt(1-2)+CDI(0.01-1) |
| 137 | Es3 | DBPC(0.1-2) | TAP(0.5-3) | CyE(0.1-5)+CDI(0.01-1) |
| 138 | Es3 | DBPC(0.1-2) | TAP(0.5-3) | CyE(1-2)+CDI(0.01-1) |
| 139 | Es3 | DBPC(0.1-2) | TAP(0.5-3) | Ole(0.1-5)+CDI(0.01-1) |
| 140 | Es3 | DBPC(0.1-2) | TAP(0.5-3) | Ole(1-4)+CDI(0.01-1) |
| 141 | Es3 | DBPC(0.1-2) | TAP(0.5-3) | GEs(0.1-5)+GEt(0.1-5) |
| 142 | Es3 | DBPC(0.1-2) | TAP(0.5-3) | GEs(0.1-5)+CyE(0.1-5) |
| 143 | Es3 | DBPC(0.1-2) | TAP(0.5-3) | GEs(0.1-5)+Ole(0.1-5) |
| 144 | Es3 | DBPC(0.1-2) | TAP(0.5-3) | GEs(0.1-5)+CDI(0.02-0.5) |
| 145 | Es3 | DBPC(0.1-2) | TAP(0.5-3) | GEt(0.1-5)+CyE(0.1-5) |
| 146 | Es3 | DBPC(0.1-2) | TAP(0.5-3) | GEt(0.1-5)+Ole(0.1-5) |
| 147 | Es3 | DBPC(0.1-2) | TAP(0.5-3) | GEt(0.1-5)+CDI(0.02-0.5) |
| 148 | Es3 | DBPC(0.1-2) | TAP(0.5-3) | CyE(0.1-5)+Ole(0.1-5) |
| 149 | Es3 | DBPC(0.1-2) | TAP(0.5-3) | CyE(0.1-5)+CDI(0.02-0.5) |
| 150 | Es3 | DBPC(0.1-2) | TAP(0.5-3) | Ole(0.1-5)+CDI(0.02-0.5) |

**[Table 6]**

| Composition example | Base oil | Antioxidant | Phosphorus-containing antiwear agent | Acid scavenger |
|---|---|---|---|---|
| 151 | Es3 | DBPC(0.1-2) | - | - |
| 152 | Es3 | DBPC(0.1-2) | TAP(1-2) | - |
| 153 | Es3 | DBPC(0.1-2) | TAP(1-2) | GEs(0.1-5) |
| 154 | Es3 | DBPC(0.1-2) | TAP(1-2) | GEs(1-2) |
| 155 | Es3 | DBPC(0.1-2) | TAP(1-2) | GEt(0.1-5) |
| 156 | Es3 | DBPC(0.1-2) | TAP(1-2) | GEt(1-2) |
| 157 | Es3 | DBPC(0.1-2) | TAP(1-2) | CyE(0.1-5) |
| 158 | Es3 | DBPC(0.1-2) | TAP(1-2) | CyE(1-2) |
| 159 | Es3 | DBPC(0.1-2) | TAP(1-2) | Ole(0.1-5) |
| 160 | Es3 | DBPC(0.1-2) | TAP(1-2) | Ole(1-4) |
| 161 | Es3 | DBPC(0.1-2) | TAP(1-2) | CDI(0.01-1) |
| 162 | Es3 | DBPC(0.1-2) | TAP(1-2) | CDI(0.05-0.5) |
| 163 | Es3 | DBPC(0.1-2) | TAP(1-2) | GEs(0.1-5)+CDI(0.01-1) |
| 164 | Es3 | DBPC(0.1-2) | TAP(1-2) | GEs(1-2)+CDI(0.01-1) |
| 165 | Es3 | DBPC(0.1-2) | TAP(1-2) | GET(0.1-5)+CDI(0.01-1) |
| 166 | Es3 | DBPC(0.1-2) | TAP(1-2) | GEt(1-2)+CDI(0.01-1) |
| 167 | Es3 | DBPC(0.1-2) | TAP(1-2) | CyE(0.1-5)+CDI(0.01-1) |
| 168 | Es3 | DBPC(0.1-2) | TAP(1-2) | CyE(1-2)+CDI(0.01-1) |
| 169 | Es3 | DBPC(0.1-2) | TAP(1-2) | Ole(0.1-5)+CDI(0.01-1) |
| 170 | Es3 | DBPC(0.1-2) | TAP(1-2) | Ole(1-4)+CDI(0.01-1) |
| 171 | Es3 | DBPC(0.1-2) | TAP(1-2) | GEs(0.1-5)+GEt(0.1-5) |
| 172 | Es3 | DBPC(0.1-2) | TAP(1-2) | GEs(0.1-5)+CyE(0.1-5) |
| 173 | Es3 | DBPC(0.1-2) | TAP(1-2) | GEs(0.1-5)+Ole(0.1-5) |
| 174 | Es3 | DBPC(0.1-2) | TAP(1-2) | GEs(0.1-5)+CDI(0.02-0.5) |
| 175 | Es3 | DBPC(0.1-2) | TAP(1-2) | GEt(0.1-5)+CyE(0.1-5) |
| 176 | Es3 | DBPC(0.1-2) | TAP(1-2) | GEt(0.1-5)+Ole(0.1-5) |
| 177 | Es3 | DBPC(0.1-2) | TAP(1-2) | GEt(0.1-5)+CDI(0.02-0.5) |
| 178 | Es3 | DBPC(0.1-2) | TAP(1-2) | CyE(0.1-5)+Ole(0.1-5) |
| 179 | Es3 | DBPC(0.1-2) | TAP(1-2) | CyE(0.1-5)+CDI(0.02-0.5) |
| 180 | Es3 | DBPC(0.1-2) | TAP(1-2) | Ole(0.1-5)+CDI(0.02-0.5) |

**[Table 7]**

| Composition example | Base oil | Antioxidant | Phosphorus-containing antiwear agent | Acid scavenger |
|---|---|---|---|---|
| 181 | Es4 | DBPC(0.1-2) | - | - |
| 182 | Es4 | DBPC(0.1-2) | TAP(0.5-3) | - |
| 183 | Es4 | DBPC(0.1-2) | YAP(0.5-3) | GEs(0.1-5) |
| 184 | Es4 | DBPC(0.1-2) | TAP(0.5-3) | GEs(1-2) |
| 185 | Es4 | DBPC(0.1-2) | YAP(0.5-3) | GEt(0.1-5) |
| 186 | Es4 | DBPC(0.1-2) | TAP(0.5-3) | GEt(1-2) |
| 187 | Es4 | DBPC(0.1-2) | TAP(0.5-3) | CyE(0.1-5) |
| 188 | Es4 | DBPC(0.1-2) | TAP(0.5-3) | CyE(1-2) |
| 189 | Es4 | DBPC(0.1-2) | TAP(0.5-3) | Ole(0.1-5) |
| 190 | Es4 | DBPC(0.1-2) | TAP(0.5-3) | Ole(1-4) |
| 191 | Es4 | DBPC(0.1-2) | TAP(0.5-3) | CDI(0.01-1) |
| 192 | Es4 | DBPC(0.1-2) | TAP(0.5-3) | CDI(0.05-0.5) |
| 193 | Es4 | DBPC(0.1-2) | TAP(0.5-3) | GEs(0.1-5)+CDI(0.01-1) |
| 194 | Es4 | DBPC(0.1-2) | TAP(0.5-3) | GEs(1-2)+CDI(0.01-1) |
| 195 | Es4 | DBPC(0.1-2) | TAP(0.5-3) | GEt(0.1-5)+CDI(0.01-1) |
| 196 | Es4 | DBPC(0.1-2) | TAP(0.5-3) | GEt(1-2)+CDI(0.01-1) |
| 197 | Es4 | DBPC(0.1-2) | TAP(0.5-3) | CyE(0.1-5)+CDI(0.01-1) |
| 198 | Es4 | DBPC(0.1-2) | TAP(0.5-3) | CyE(1-2)+CDI(0.01-1) |
| 199 | Es4 | DBPC(0.1-2) | TAP(0.5-3) | Ole(0.1-5)+CDI(0.01-1) |
| 200 | Es4 | DBPC(0.1-2) | TAP(0.5-3) | Ole(1-4)+CDI(0.01-1) |
| 201 | Es4 | DBPC(0.1-2) | TAP(0.5-3) | GEs(0.1-5)+GEt(0.1-5) |
| 202 | Es4 | DBPC(0.1-2) | TAP(0.5-3) | GEs(0.1-5)+CyE(0.1-5) |
| 203 | Es4 | DBPC(0.1-2) | TAP(0.5-3) | GEs(0.1-5)+Ole(0.1-5) |
| 204 | Es4 | DBPC(0.1-2) | TAP(0.5-3) | GEs(0.1-5)+CDI(0.02-0.5) |
| 205 | Es4 | DBPC(0.1-2) | TAP(0.5-3) | GEt(0.1-5)+CyE(0.1-5) |
| 206 | Es4 | DBPC(0.1-2) | TAP(0.5-3) | GEt(0.1-5)+Ole(0.1-5) |
| 207 | Es4 | DBPC(0.1-2) | TAP(0.5-3) | GEt(0.1-5)+CDI(0.02-0.5)} |
| 208 | Es4 | DBPC(0.1-2) | TAP(0.5-3) | CyE(0.1-5)+Ole(0.1-5) |
| 209 | Es4 | DBPC(0.1-2) | TAP(0.5-3) | CyE(0.1-5)+CDI(0.02-0.5) |
| 210 | Es4 | DBPC(0.1-2) | TAP(0.5-3) | Ole(0.1-5)+CDI(0.02-0.5) |

**[Table 8]**

| Composition example | Base oil | Antioxidant | Phosphorus-containing antiwear agent | Acid scavenger |
|---|---|---|---|---|
| 211 | Es4 | DBPC(0.1-2) | - | - |
| 212 | Es4 | DBPC(0.1-2) | TAP(1-2) | - |
| 213 | Es4 | DBPC(0.1-2) | TAP(1-2) | GEs(0.1-5) |
| 214 | Es4 | DBPC(0.1-2) | TAP(1-2) | GEs(1-2) |
| 215 | Es4 | DBPC(0.1-2) | TAP(1-2) | GEt(0.1-5) |
| 216 | Es4 | DBPC(0.1-2) | TAP(1-2) | GEt(1-2) |
| 217 | Es4 | DBPC(0.1-2) | TAP(1-2) | CyE(0.1-5) |
| 218 | Es4 | DBPC(0.1-2) | TAP(1-2) | CyE(1-2) |
| 219 | Es4 | DBPC(0.1-2) | TAP(1-2) | Ole(0.1-5) |
| 220 | Es4 | DBPC(0.1-2) | TAP(1-2) | Ole(1-4) |
| 221 | Es4 | DBPC(0.1-2) | TAP(1-2) | CDI(0.01-1) |
| 222 | Es4 | DBPC(0.1-2) | TAP(1-2) | CDI(0.05-0.5) |
| 223 | Es4 | DBPC(0.1-2) | TAP(1-2) | GEs(0.1-5)+CDI(0.01-1) |
| 224 | Es4 | DBPC(0.1-2) | TAP(1-2) | GEs(1-2)+CDI(0.01-1) |
| 225 | Es4 | DBPC(0.1-2) | TAP(1-2) | GEt(0.1-5)+CDI(0.01-1) |
| 226 | Es4 | DBPC(0.1-2) | TAP(1-2) | GEt(1-2)+CDI(0.01-1) |
| 227 | Es4 | DBPC(0.1-2) | TAP(1-2) | CyE(0.1-5)+CDI(0.01-1) |
| 228 | Es4 | DBPC(0.1-2) | TAP(1-2) | CyE(1-2)+CDI(0.01-1) |
| 229 | Es4 | DBPC(0.1-2) | TAP(1-2) | Ole(0.1-5)+CDI(0.01-1) |
| 230 | Es4 | DBPC(0.1-2) | TAP(1-2) | Ole(1-4)+CDI(0.01-1) |
| 231 | Es4 | DBPC(0.1-2) | TAP(1-2) | GEs(0.1-5)+GEt(0.1-5) |
| 232 | Es4 | DBPC(0.1-2) | TAP(1-2) | GEs(0.1-5)+CyE(0.1-5) |
| 233 | Es4 | DBPC(0.1-2) | TAP(1-2) | GEs(0.1-5)+Ole(0.1-5) |
| 234 | Es4 | DBPC(0.1-2) | TAP(1-2) | GEs(0.1-5)+CDI(0.02-0.5) |
| 235 | Es4 | DBPC(0.1-2) | TAP(1-2) | GEt(0.1-5)+CyE(0.1-5) |
| 236 | Es4 | DBPC(0.1-2) | TAP(1-2) | GEt(0.1-5)+Ole(0.1-5) |
| 237 | Es4 | DBPC(0.1-2) | TAP(1-2) | GEt(0.1-5)+CDI(0.02-0.5) |
| 238 | Es4 | DBPC(0.1-2) | TAP(1-2) | CyE(0.1-5)+Ole(0.1-5) |
| 239 | Es4 | DBPC(0.1-2) | TAP(1-2) | CyE(0.1-5)+CDI(0.02-0.5) |
| 240 | Es4 | DBPC(0.1-2) | TAP(1-2) | Ole(0.1-5)+CDI(0.02-0.5) |

**[Table 9]**

| Composition example | Base oil | Antioxidant | Phosphorus-containing antiwear agent | Acid scavenger |
|---|---|---|---|---|
| 241 | Es5 | DBPC(0 1-2) | - | - |
| 242 | Es5 | DBPC(0.1-2) | TAP(0.5-3) | - |
| 243 | Es5 | DBPC(0.1-2) | TAP(0.5-3) | GEs(0.1-5) |
| 244 | Es5 | DBPC(0.1-2) | TAP(0.5-3) | GEs(1-2) |
| 245 | Es5 | DBPC(0.1-2) | TAP(0.5-3) | GEt(0.1-5) |
| 246 | Es5 | DBPC(0.1-2) | TAP(0.5-3) | GEt(1-2) |
| 247 | Es5 | DBPC(0.1-2) | TAP(0.5-3) | CyE(0.1-5) |
| 248 | Es5 | DBPC(0.1-2) | TAP(0.5-3) | CyE(1-2) |
| 249 | Es5 | DBPC(0.1-2) | TAP(0.5-3) | Ole(0.1-5) |
| 250 | Es5 | DBPC(0.1-2) | TAP(0.5-3) | Ole(1-4) |
| 251 | Es5 | DBPC(0.1-2) | TAP(0.5-3) | CDI(0.01-1) |
| 252 | Es5 | DBPC(0.1-2) | TAP(0.5-3) | CDI(0.05-0.5) |
| 253 | Es5 | DBPC(0.1-2) | TAP(0.5-3) | GEs(0.1-5)+CDI(0.01-1) |
| 254 | Es5 | DBPC(0. 1-2) | TAP(0.5-3) | GEs(1-2)+CDI(0.01-1) |
| 255 | Es5 | DBPC(0.1-2) | TAP(0.5-3) | GEt(0.1-5)+CDI(0.01-1) |
| 256 | Es5 | DBPC(0.1-2) | TAP(0.5-3) | GEt(1-2)+CDI(0.01-1) |
| 257 | Es5 | DBPC(0.1-2) | TAP(0.5-3) | CyE(0.1-5)+CDI(0.01-1) |
| 258 | Es5 | DBPC(0.1-2) | TAP(0.5-3) | (CyE(1-2)+CDI(0.01-1) |
| 259 | Es5 | DBPC(0.1-2) | TAP(0.5-3) | Ole(0.1-5)+CDI(0.01-1) |
| 260 | Es5 | DBPC(0.1-2) | TAP(0.5-3) | Ole(1-4)+CDI(0.01-1) |
| 261 | Es5 | DBPC(0.1-2) | TAP(0.5-3) | GEs(0.1-5)+GEt(0.1-5) |
| 262 | Es5 | DBPC(0.1-2) | TAP(0.5-3) | GEs(0.1-5)+CyE(0.1-5) |
| 263 | Es5 | DBPC(0.1-2) | TAP(0.5-3) | GEs(0.1-5)+Ole(0.1-5) |
| 264 | Es5 | DBPC(0.1-2) | TAP(0.5-3) | GEs(0.1-5)+CDI(0.02-0.5) |
| 265 | Es5 | DBPC(0.1-2) | TAP(0.5-3) | GEt(0.1-5)+CyE(0.1-5) |
| 266 | Es5 | DBPC(0.1-2) | TAP(0.5-3) | GEt(0.1-5)+Ole(0.1-5) |
| 267 | Es5 | DBPC(0.1-2) | TAP(0.5-3) | GEt(0.1-3)+CDI(0.02-0.5) |
| 268 | Es5 | DBPC(0.1-2) | TAP(0.5-3) | CyE(0.1-5)+Ole(0.1-5) |
| 269 | Es5 | DBPC(0.1-2) | TAP(0.5-3) | CyE(0.1-5)+CDI(0.02-0.5) |
| 270 | Es5 | DBPC(0.1-2) | TAP(0.5-3) | Ole(0.1-5)+CDI(0.02-0.5) |

**[Table 10]**

| Composition example | Base oil | Antioxidant | Phosphorus-containing antiwear agent | Acid scavenger |
|---|---|---|---|---|
| 271 | Es5 | DBPC(0.1-2) | - | - |
| 272 | Es5 | DBPC(0.1-2) | TAP(1-2) | - |
| 273 | Es5 | DBPC(0.1-2) | TAP(1-2) | GEs(0.1-5) |
| 274 | Es5 | DBPC(0.1-2) | TAP(1-2) | GEs(1-2) |
| 275 | Es5 | DBPC(0.1-2) | TAP(1-2) | GEt(0.1-5) |
| 276 | Es5 | DBPC(0.1-2) | TAP(1-2) | GEt(1-2) |
| 277 | Es5 | DBPC(0.1-2) | TAP(1-2) | CyE(0.1-5) |
| 278 | Es5 | DBPC(0.1-2) | TAP(1-2) | CyE(1-2) |
| 279 | Es5 | DBPC(0.1-2) | TAP(1-2) | Ole(0.1-5) |
| 280 | Es5 | DBPC(0.1-2) | TAP(1-2) | Ole(1-4) |
| 281 | Es5 | DBPC(0.1-2) | TAP(1-2) | CDI(0.01-1) |
| 282 | Es5 | DBPC(0.1-2) | TAP(1-2) | CDI(0.05-0.5) |
| 283 | Es5 | DBPC(0.1-2) | TAP(1-2) | GEs(0.1-5)+CDI(0.01-1) |
| 284 | Es5 | DBPC(0.1-2) | TAP(1-2) | GEs(1-2)+CDI(0.01-1) |
| 285 | Es5 | DBPC(0.1-2) | TAP(1-2) | GEt(0.1-5)+CDI(0.01-1) |
| 286 | Es5 | DBPC(0.1-2) | TAP(1-2) | GEt(1-2)+CDI(0.01-1) |
| 287 | Es5 | DBPC(0.1-2) | TAP(1-2) | CyE(0.1-5)+CDI(0.01-1) |
| 288 | Es5 | DBPC(0.1-2) | TAP(1-2) | CyE(1-2)+CDI(0.01-1) |
| 289 | Es5 | DBPC(0.1-2) | TAP(1-2) | Ole(0.1-5)+CDI(0.01-1) |
| 290 | Es5 | DBPC(0.1-2) | TAP(1-2) | Ole(1-4)+CDI(0.01-1) |
| 291 | Es5 | DBPC(0.1-2) | TAP(1-2) | GEs(0.1-5)+GEt(0.1-5) |
| 292 | Es5 | DBPC(0.1-2) | TAP(1-2) | GEs(0.1-5)+CyE(0.1-5) |
| 293 | Es5 | DBPC(0.1-2) | TAP(1-2) | GEs(0.1-5)+Ole(0.1-5) |
| 294 | Es5 | DBPC(0.1-2) | TAP(1-2) | GEs(0.1-5)+CDI(0.02-0.5) |
| 295 | Es5 | DBPC(0.1-2) | TAP(1-2) | GEt(0.1-5)+CyE(0.1-5) |
| 296 | Es5 | DBPC(0.1-2) | TAP(1-2) | GEt(0.1-5)+Ole(0.1-5) |
| 297 | Es5 | DBPC(0.1-2) | TAP(1-2) | GEt(0.1-5)+CDI(0.02-0.5) |
| 298 | Es5 | DBPC(0.1-2) | TAP(1-2) | CyE(0.1-5)+Ole(0.1-5) |
| 299 | Es5 | DBPC(0.1-2) | TAP(1-2) | CvE(0.1-5)+CDI(0.02-0.5) |
| 300 | Es5 | DBPC(0.1-2) | TAP(1-2) | Ole(0.1-5)+CDI(0.02-0.5) |

The refrigerant is a mixed refrigerant containing HFO-1132(E) and HFO-1234yf (hereinafter simply referred to as "mixed refrigerant"). The HFO-1132(E) fraction in the mixed refrigerant (the proportion of HFO-1132(E) to the total amount of HFO-1132(E) and HFO-1234yf) is preferably 1% by mass or more, and preferably 90% by mass or less. From the viewpoint of lowering the boiling point and increasing the pressure of the mixed refrigerant to extract heat at lower temperatures, the HFO-1132(E) fraction is preferably 5% by mass or more, 10% by mass or more, or 15% by mass or more, and from the viewpoint of improving stability and combustion resistance, the HFO-1132(E) fraction is preferably 80% by mass or less, 60% by mass or less, 50% by mass or less, 40% by mass or less, 30% by mass or less, or 25% by mass or less.

When the HFO-1132(E) fraction is within the above range, the refrigerant dissolution viscosity of the working fluid composition under high temperature and high pressure conditions can be higher compared to using HFO-1234yf alone as the refrigerant, thereby improving the antiwear property of the refrigerant compressor. In other words, in another embodiment of the present invention, HFO-1132(E) is useful as a refrigerant dissolution viscosity improver in a working fluid composition containing HFO-1234yf and refrigerating machine oil. Furthermore, another embodiment of the present invention is a method for improving the refrigerant dissolution viscosity by mixing and using HFO-1132(E) as the refrigerant in a working fluid composition containing HFO-1234yf and refrigerating machine oil. In these embodiments, the antiwear property and reliability of the refrigerant compressor can be expected to improve. Additionally, by significantly improving the refrigerant dissolution viscosity, it is possible to advance the low-viscosity grade of conventional refrigerating machine oils used in refrigerating machines employing HFO-1234yf. This allows for further reduction of the viscosity of refrigerating machine oils in lower temperature regions.

The refrigerant may contain only HFO-1132(E) and HFO-1234yf, or may further contain an additional refrigerant in addition to HFO-1132(E) and HFO-1234yf. Examples of the additional refrigerant include a saturated hydrofluorocarbon (HFC) and an unsaturated hydrofluorocarbon (HFO) other than HFO-1132(E) and HFO-1234yf.

Examples of the saturated hydrofluorocarbon include difluoromethane (R32), trifluoromethane (R23), pentafluoroethane (R125), 1,1,2,2-tetrafluoroethane (R134), 1,1,1,2-tetrafluoroethane (R134a), 1,1,1-trifluoroethane (R143a), 1,1-difluoroethane (R152a), fluoroethane (R161), 1,1,1,2,3,3,3-heptafluoropropane (R227ea), 1,1,1,2,3,3-hexafluoropropane (R236ea), 1,1,1,3,3,3-hexafluoropropane (R236fa), 1,1,1,3,3-pentafluoropropane (R245fa), and 1,1,1,3,3-pentafluorobutane (R365mfc). The refrigerant may contain one or more types of these saturated hydrofluorocarbons.

In one embodiment, the refrigerant may contain HFO-1132(E), HFO-1234yf, and difluoromethane (R32), and may consist only of HFO-1132(E), HFO-1234yf, and difluoromethane (R32). In these cases, the content of HFO-1132(E) may be 10% by mass or more, 15% by mass or more, or 20% by mass or more, and preferably 45% by mass or less, 40% by mass or less, or 35% by mass or less, based on the total amount of the refrigerant. The content of HFO-1234yf may be 35% by mass or more, 40% by mass or more, or 45% by mass or more, and preferably 65% by mass or less, 60% by mass or less, or 55% by mass or less, based on the total amount of the refrigerant. The content of R32 may be 10% by mass or more, 15% by mass or more, or 20% by mass or more, and preferably 40% by mass or less, 35% by mass or less, or 30% by mass or less, based on the total amount of the refrigerant. Specific examples of such refrigerants include R479A (a refrigerant consisting of 28% by mass (±2% by mass) of HFO-1132(E), 50.5% by mass (±2% by mass) of HFO-1234yf, and 21.5% by mass (±2% by mass) of R32). The GWP (AR5) of such mixed refrigerants containing R32 is preferably 500 or lower, 300 or lower, 200 or lower, or 160 or lower, and may be 0 or higher, 10 or higher, or 50 or higher.

Examples of the unsaturated hydrofluorocarbon other than HFO-1132(E) and HFO-1234yf include 1,2,3,3,3-pentafluoropropene (HFO-1225ye), 1,3,3,3-tetrafluoropropene (HFO-1234ze), 1,2,3,3-tetrafluoropropene (HFO-1234ye), 3,3,3-trifluoropropene (HFO-1243zf), trifluoroethylene (HFO-1123), cis-1,2-difluoroethylene (HFO-1132(Z)), and 1,1-difluoroethylene (HFO-1132a).

The boiling point of the refrigerant is preferably -30°C or lower, more preferably -35°C or lower, or -40°C or lower, and may be -60°C or higher, -55°C or higher, or -50°C or higher. The boiling point of the refrigerant in this specification refers to the temperature at which the liquid phase of the refrigerant becomes atmospheric pressure (101.3 kPa).

The volume resistivity of the refrigerant is preferably 1×10⁻⁶ TΩ·m or more, more preferably 1×10⁻⁴ TΩ·m or more, 1×10⁻³ TΩ·m or more, or 1×10⁻² TΩ·m or more.

The saturated vapor pressure at 80°C of the refrigerant is preferably 3 MPa or higher, more preferably 3.5 MPa or higher, or 3.7 MPa or higher, and may be 5 MPa or lower or 4 MPa or lower. The saturated vapor pressure of the refrigerant at 40°C is preferably 1.1 MPa or higher, more preferably 1.2 MPa or higher, or 1.3 MPa or higher, and may be 2.5 MPa or lower or 2 MPa or lower.

The refrigerant may be mildly flammable. Specifically, the refrigerant may be a refrigerant included in the A2 classification or A2L classification in the ASHRAE (The American Society of Heating, Refrigerating and Air-conditioning Engineers) 34 combustion classification.

By using a mixed refrigerant in which HFO-1132(E) is mixed with HFO-1234yf, the refrigerant can be useful as a heating heat pump that can extract heat even in lower temperature environments, such as - 20°C or lower, more preferably -30°C or lower, or -40°C or lower. This mixed refrigerant preferably contains HFO-1132(E) and HFO-1234yf as components of the mixed refrigerant to have a boiling point (below - 40°C) and a saturated pressure (a positive pressure at -40°C), as shown in Tables 11 and 12, and a GWP (AR4) of 5 to 7, a GWP (AR5) of 1 or lower, and a combustion classification of 2L. In the tables below, E.H indicates that the heating method in the low-temperature environment is an electric heater, and H.P indicates that the heat pump can be applied.

**[Table 11]**

| Refrigerant No. | 1 | 2 | 3 | 4 | 5 | 6 | 7 | 8 | 9 |
|---|---|---|---|---|---|---|---|---|---|
| HFO-1 132(E) | 0 | 10 | 12.1 | 15 | 20 | 25 | 30 | 35 | 40 |
| HFO-1234yf | 100 | 90 | 87.9 | 85 | 80 | 75 | 70 | 65 | 60 |
| Boiling point (°C) | -29.5 | -38.8 | -40 | -41.4 | -43.3 | -44.7 | -45.9 | -46.9 | -47.7 |
| GWP(AR4) | 4 | 5 | 5 | 5 | 5 | 6 | 6 | 6 | 6 |
| GWP(AR5) | <1 | <1 | <1 | <1 | <1 | <1 | <1 | <1 | <1 |
| Saturated pressure (20°C) MPa | 0.59 | - | - | - | - | - | - | - | - |
| Saturated pressure (40°C) MPa | - | - | - | - | - | - | 1.592 | - | 1.745 |
| Saturated pressure (45°C) MPa | 1.154 | - | - | - | 1.607 | - | 1.795 | 1.883 | 1.966 |
| Saturated pressure (-10°C) MPa | 0..222 | - | - | 0.35 | - | - | 0.425 | - | 0.461 |
| Saturated pressure (-40°C) kPaG | -39 | -4.4 | 0.9 | 7.5 | 17.2 | 25.3 | 32.3 | 38.4 | 43.9 |
| ASHRAE combustion classification | 2L | 2L | 2L | 2L | 2L | 2L | 2L | 2L | 2L |
| Heating method | E.H | E.H | H.P | H.P | H.P | H.P | H.P | H.P | H.P |

**[Table 12]**

| Refrigerant No. | 10 | 11 | 12 | 13 | 14 | 15 | 16 | 17 | 18 | 19 |
|---|---|---|---|---|---|---|---|---|---|---|
| HFO-1132(E) | 45 | 50 | 53.5 | 55 | 60 | 65 | 70 | 72 | 75 | 23 |
| HFO-1234yf | 55 | 50 | 46.5 | 45 | 40 | 35 | 30 | 28 | 25 | 77 |
| Boiling point (°C) | -48.4 | -49.1 | - | -49.6 | -50.2 | -50.5 | - | -51.2 | -51.4 | -44.6 |
| GWP(AR4) | 7 | 7 | 7 | 7 | 8 | 8 | 8 | 8 | 9 | - |
| GWP(AR5) | <1 | <1 | <1 | <1 | <1 | <1 | <1 | <1 | <1 | <1 |
| Saturated pressure (20°C) MPa | - | - | - | - | - | - | - | - | - | 0.94 |
| Saturated pressure (40°C) MPa | 1.817 | - | 1.95 | 1.95 | 2.012 | - | 2.128 | - | - | - |
| Saturated pressure (45°C) MPa | - | 2.123 | - | - | - | - | - | - | - | |
| Saturated pressure (-10°C) MPa | - | 0.492 | - | - | - | - | - | - | - | - |
| Saturated pressure (-40°C) kPaG | 48.8 | 53.4 | - | 57.5 | 61.4 | 65 | - | 69.6 | 71.5 | - |
| ASHRAE combustion classification | 2L | 2L | 2L | 2 | 2 | 2 | 2 | 2 | 2 | 2L |
| Heating method | H.P | H. P | H.P | H.P | H.P | H.P | H.P | H.P | H.P | H.P |

The proportion of HFO-1132(E) in the total amount of HFO-1132(E) and HFO-1234yf in such mixed refrigerants is preferably 12.1% by mass or more, more preferably 15% by mass or more, 20% by mass or more, or 25% by mass or more, and preferably 53.5% by mass or less, more preferably 50% by mass or less, or 45% by mass or less. Such mixed refrigerants include both mixed refrigerants with an HFO-1132(E) proportion of 25% by mass or less or less than 25% by mass, such as R-474A (a mixed refrigerant consisting of 23% by mass (±2% by mass) of HFO-1132(E) and 77% by mass (±2% by mass) of HFO-1234yf), and mixed refrigerants with an HFO-1132(E) proportion of 25% by mass or more. In particular, by setting the proportion of HFO-1132(E) in the total amount of HFO-1132(E) and HFO-1234yf to 25% by mass or more, more than 25% by mass, 30% by mass or more, 32.5% by mass or more, or 35% by mass or more, the boiling point of the mixed refrigerant can be lowered, allowing heat extraction at lower temperatures, and the refrigerant fraction (refrigerant solubility) in the working fluid composition can be reduced, maintaining a high viscosity (refrigerant dissolution viscosity (unit: mm²/s)) of the working fluid composition, thereby improving the reliability of the sliding parts of the refrigerant compressor. Furthermore, by setting the proportion of HFO-1132(E) in the total amount of HFO-1132(E) and HFO-1234yf to 50% by mass or less, 40% by mass or less, 30% by mass or less, less than 30% by mass, 25% by mass or less, or less than 25% by mass, a more stable working fluid composition can be obtained.

The working fluid composition contains the refrigerating machine oil and refrigerant as described above. The content of the refrigerating machine oil in the working fluid composition may be, for example, 1 part by mass or more or 2 parts by mass or more, and may be 500 parts by mass or less or 400 parts by mass or less, with respect to 100 parts by mass of the refrigerant.

The refrigerant fraction (refrigerant solubility) of the working fluid composition at 80°C and 2.5 MPa (the proportion of the refrigerant to the total amount of the refrigerating machine oil and refrigerant; also referred to as the refrigerant dissolution amount in the working fluid composition; the same applies hereinafter) can be lower compared to using HFO-1234yf alone as the refrigerant, and may be 80% by mass or less, preferably 60% by mass or less, 40% by mass or less, 35% by mass or less, or 30% by mass or less, and may be 10% by mass or more or 20% by mass or more.

The refrigerant dissolution viscosity of the working fluid composition at 80°C and 2.5 MPa can be higher compared to using HFO-1234yf alone as the refrigerant, and may be 1 mm²/s or more preferably 1.5 mm²/s or higher, 2 mm²/s or higher, or 2.5 mm²/s or higher, and may be 4 mm²/s or lower.

The refrigerant fraction of the working fluid composition at 80°C and 2 MPa may be 30% by mass or less, preferably 28% by mass or less, 25% by mass or less, 23% by mass or less, or 20% by mass or less, and may be 5% by mass or more or 15% by mass or more.

The refrigerant dissolution viscosity of the working fluid composition at 80°C and 2 MPa may be 2.2 mm²/s or more preferably 2.5 mm²/s or higher, 3 mm²/s or higher, 3.5 mm²/s or higher, or 3.7 mm²/s or higher, and may be 5 mm²/s or lower.

The refrigerant fraction of the working fluid composition at 80°C and 1.5 MPa may be 20% by mass or less, preferably 18% by mass or less, 16% by mass or less, or 15% by mass or less, and may be 5% by mass or more, 8% by mass or more, or 10% by mass or more.

The refrigerant dissolution viscosity of the working fluid composition at 80°C and 1.5 MPa may be 3.5 mm²/s or more preferably 4 mm²/s or higher, 4.5 mm²/s or higher, or 5 mm²/s or higher, and may be 10 mm²/s or lower, 8 mm²/s or lower, or 6 mm²/s or lower.

This working fluid composition is excellent in having a high refrigerant dissolution viscosity. For example, the refrigerant dissolution viscosity of this working fluid composition is higher compared to using a refrigerant containing only HFO-1234yf. The refrigerant dissolution viscosity of the working fluid composition at 80°C and 2 MPa may be 1.1 times or more, 1.2 times or more, 1.5 times or more, or 1.8 times or more, and may be 3 times or less or 2.5 times or less compared to the refrigerant dissolution viscosity of the working fluid composition under the same conditions using a refrigerant containing only HFO-1234yf.

The refrigerant dissolution viscosity of the working fluid composition at 80°C and a refrigerant fraction of 20% by mass may be 5 mm²/s or lower or 4 mm²/s or lower, preferably 3 mm²/s or higher or 3.3 mm²/s or higher.

The two-layer separation temperature of the working fluid composition at an oil fraction of 1 to 99% by mass, particularly 10 to 30% by mass, may be -30°C or lower, preferably -40°C or lower, -50°C or lower, or -60°C or lower.

The volume resistivity of the working fluid composition may be 1×10⁻⁶ TΩ·m or more preferably 1×10⁻⁴ TΩ·m or higher, 1×10⁻³ TΩ·m or higher, or 1×10⁻² TΩ·m or higher. By using highly refined polyvinyl ether or polyol ester, particularly polyol ester, as the refrigerating machine oil, a working fluid composition with higher volume resistivity can be obtained.

The working fluid composition described above is filled in the refrigerant circulation system of the refrigerating machine. In other words, another embodiment of the present invention is a refrigerating machine containing a refrigerant circulation system, wherein the refrigerant circulation system is filled with a refrigerating machine oil containing at least one base oil selected from the group consisting of polyvinyl ether, polyalkylene glycol, and polyol ester, and a refrigerant containing trans-1,2-difluoroethylene (HFO-1132(E)) and 2,3,3,3-tetrafluoropropene (HFO-1234yf).

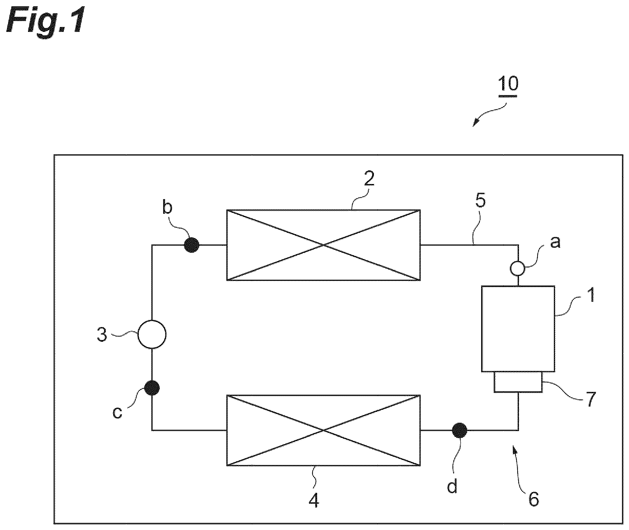

Fig. 1 is a schematic diagram showing one embodiment of a refrigerating machine. As shown in Fig. 1, the refrigerating machine 10 includes a refrigerant circulation system 6 in which a compressor (refrigerant compressor) 1, a condenser (gas cooler) 2, an expansion mechanism 3 (capillary, expansion valve, etc.), and an evaporator (heat exchanger) 4 are sequentially connected by a flow path 5. In one embodiment, the refrigerant circulation system 6 further includes an accumulator 7 between the evaporator 4 and the compressor 1 (on the side of the compressor 1) to suppress and prevent liquid refrigerant from directly flowing into the compressor 1.

In the refrigerant circulation system 6, the high-temperature (usually 70 to 120°C) refrigerant discharged from the compressor 1 into the flow path 5 first becomes a high-density fluid (supercritical fluid, etc.) in the condenser 2. Subsequently, the refrigerant liquefies by passing through the narrow flow path of the expansion mechanism 3 and then vaporizes in the evaporator 4, becoming low-temperature (usually -40 to 0°C). The cooling by the refrigerating machine 10 utilizes the phenomenon where the refrigerant absorbs heat from the surroundings when vaporizing in the evaporator 4.

Inside the compressor 1, a small amount of refrigerant and a large amount of refrigerating machine oil coexist under high-temperature (usually 70 to 120°C) conditions. The refrigerant discharged from the compressor 1 into the flow path 5 is gaseous and contains a small amount (usually 1 to 10% by volume) of refrigerating machine oil as mist, with a small amount of refrigerant dissolved in this mist-like refrigerating machine oil (point a in Fig. 1).

In the condenser 2, the gaseous refrigerant is compressed to become a high-density fluid, and a large amount of refrigerant and a small amount of refrigerating machine oil coexist under relatively high-temperature (usually 40 to 80°C) conditions (point b in Fig. 1). Furthermore, the mixture of a large amount of refrigerant and a small amount of refrigerating machine oil is sequentially sent to the expansion mechanism 3 and the evaporator 4, rapidly becoming low-temperature (usually -40 to 0°C) (points c and d in Fig. 1), and then returned to the compressor 1.

When the compressor 1 is under high pressure, there is a possibility that liquid refrigerant may directly flow into the compressor 1. To suppress and prevent this, as mentioned above, the accumulator 7 is placed between the evaporator 4 and the compressor 1 (on the side of the compressor 1). In the resting state, a large amount of liquid refrigerant may be present inside the compressor 1, and during startup, the viscosity of the refrigerating machine oil may rapidly decrease, leading to insufficient lubrication, and it is necessary to maintain an appropriate viscosity even when the liquid refrigerant is dissolved. Therefore, it is necessary to maintain appropriate viscosity even when liquid refrigerant is dissolved.

Examples of such refrigerating machines 10 include refrigerating devices and air conditioning devices. Examples of the refrigerating devices include refrigerators, refrigerated warehouses, vending machines, cooling devices in chemical plants, etc. Examples of the air conditioning devices include automotive air conditioners, residential air conditioners, package air conditioners, dehumidifiers, etc. When the refrigerating machine 10 is an air conditioner for electric vehicles, hybrid vehicles, etc., particularly for electric vehicles that cannot utilize engine waste heat, using the above-described working fluid composition allows heat extraction as a heat pump even in extremely low-temperature environments such as -20°C or lower, -30°C or lower, or -40°C or lower without using an electric heater, thereby suppressing battery consumption and extending the driving range of electric vehicles.

### Examples

Hereinafter, the present invention will be described more specifically based on examples, but the present invention is not limited to these examples.

### (Refrigerating machine oil 1)

A refrigerating machine oil 1 containing base oil 1 (polyol ester (ester of pentaerythritol and dipentaerythritol with 2-ethylhexanoic acid and 3,5,5-trimethylhexanoic acid), 100°C kinematic viscosity: 9.7 mm²/s, 40°C kinematic viscosity: 90.2 mm²/s, viscosity index: 92, acid value: less than 0.01 mg KOH/g), glycidyl ester-based acid scavenger, phenol-based antioxidant, and phosphorus-containing antiwear agent was prepared. The total content of the additives was selected from those exemplified in Table 1 within the range of 0.5% by mass to 5% by mass.

### (Refrigerating machine oil 2)

A refrigerating machine oil 2 was prepared similarly to the refrigerating machine oil 1, except that base oil 2 (polyol ester (ester of pentaerythritol with 2-ethylhexanoic acid and 3,5,5-trimethylhexanoic acid), 100°C kinematic viscosity: 8.3 mm²/s, 40°C kinematic viscosity: 68.5 mm²/s, viscosity index: 92, acid value: less than 0.01 mg KOH/g) was used instead of the base oil 1.

### (Refrigerating machine oil 3)

A refrigerating machine oil 3 was prepared by using base oil 3 (polyvinyl ether (copolymer of ethyl vinyl ether and isobutyl vinyl ether, ethyl vinyl ether/isobutyl vinyl ether = 83/17 (molar ratio)), 40°C kinematic viscosity: 33.7 mm²/s, 100°C kinematic viscosity: 5.3 mm²/s) instead of the base oil 1 in the refrigerating machine oil 1, and blending the base oil 3 with glycidyl ether-based acid scavenger, phenol-based antioxidant, and phosphorus-containing antiwear agent. The total content of the additives was selected from those exemplified in Table 1 within the range of 0.5% by mass to 5% by mass.

### (Refrigerating machine oil 4)

A refrigerating machine oil 4 was prepared by using base oil 4 (polyalkylene glycol (polypropylene glycol dimethyl ether), 40°C kinematic viscosity: 40.1 mm²/s, 100°C kinematic viscosity: 9.3 mm²/s) instead of the base oil 1 in the refrigerating machine oil 1, and blending the base oil 4 with epoxy-based acid scavenger, phenol-based antioxidant, and phosphorus-containing antiwear agent. The total content of the additives was selected from those exemplified in Table 1 within the range of 0.5% by mass to 6% by mass.

### (Mixed refrigerant)

Mixed refrigerants 1 and 2 described below were prepared as refrigerants that can be classified as A2L refrigerants according to ASHRAE combustion classification, which are refrigerants obtained by mixing HFO-1234yf (boiling point: -29.5°C, GWP (AR5): <1) with trans-1,2-difluoroethylene (HFO-1132(E)) (boiling point: -52.5°C, GWP (AR5): <1) (the data of such mixed refrigerant are shown in Tables 11 and 12).
Mixed Refrigerant 1: mixed refrigerant consisting of 35% by mass of HFO-1132(E) and 65% by mass of HFO-1234yf.
Mixed Refrigerant 2: mixed refrigerant consisting of 23% by mass of HFO-1132(E) and 77% by mass of HFO-1234yf

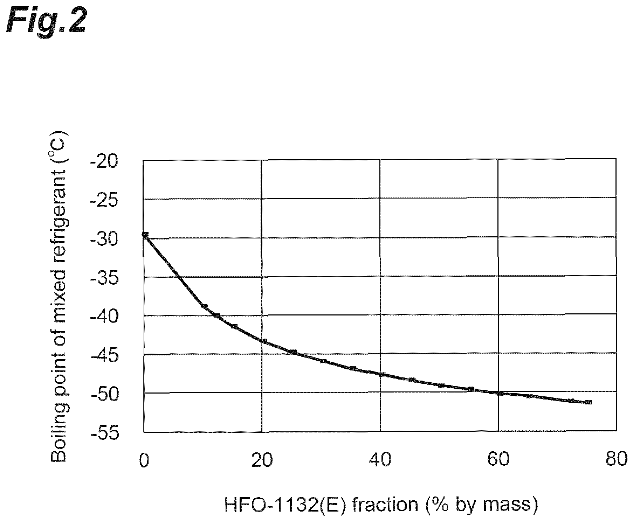

The relationship between the HFO-1132(E) fraction in the mixed refrigerant of HFO-1132(E) and HFO-1234yf and the boiling point of the mixed refrigerant is shown in Fig. 2.

Additionally, the following mixed refrigerant 3 was prepared by further mixing difluoromethane (R32) with HFO-1132(E) and HFO-1234yf.
Mixed Refrigerant 3: mixed refrigerant consisting of 28% by mass of HFO-1132(E), 50.5% by mass of HFO-1234yf, and 21.5% by mass of R32 (the proportion of HFO-1132(E) in the total amount of HFO-1132(E) and HFO-1234yf: 35.7% by mass)

Furthermore, the following mixed refrigerant 4 was prepared by mixing mixed refrigerant 1 and mixed refrigerant 2 in a ratio of approximately 7:3.
Mixed Refrigerant 4: A mixed refrigerant consisting of 31.5% by mass of HFO-1132(E) and 68.5% by mass of HFO-1234yf

### [Evaluation of pressure-temperature-solubility characteristics and refrigerant dissolution viscosity]

The pressure-temperature-solubility characteristics and refrigerant dissolution viscosity of the working fluid compositions consisting of mixed refrigerants 1 to 3 or HFO-1234yf alone and refrigerating machine oil 1 were evaluated as follows.

First, 400 ml of refrigerating machine oil 1 was placed in a pressure-resistant container with a vibrating viscometer, and the container was vacuum degassed. Then, mixed refrigerants 1 to 3 were added to prepare the working fluid composition. Subsequently, the temperature and pressure inside the pressure-resistant container were varied within the range of temperature: 30 to 80°C and absolute pressure: 0.5 to about 4 MPa, and the volume and absolute viscosity of the working fluid composition were measured at each temperature and pressure. Using the obtained measurement values, refrigerant gas density, the amount of refrigerating machine oil and refrigerant filled, and the mass of the working fluid composition, the refrigerant fraction (refrigerant dissolution amount) (% by mass) and kinematic viscosity (refrigerant dissolution viscosity) (mm²/s) of the working fluid composition were calculated. From the obtained results, refrigerant fraction (refrigerant dissolution amount)-pressure diagrams at 10°C intervals from 30 to 80°C and temperature-viscosity (refrigerant dissolution viscosity) diagrams at 10% by mass intervals from 0 to 40% by mass refrigerant fraction were created.

The main temperature and pressure refrigerant fraction and refrigerant dissolution viscosity values were extracted from the above evaluation results and shown in Table 13. Compared to Comparative Example 1 using HFO-1234yf alone as the refrigerant, the refrigerant fraction (refrigerant dissolution amount) was smaller and the refrigerant dissolution viscosity was higher under the same temperature and pressure conditions in Examples 1 to 3 using mixed refrigerants 1 to 3, respectively. In particular, in Comparative Example 1, the refrigerant fraction (refrigerant dissolution amount) rapidly increased and the refrigerant dissolution viscosity tended to fall below 1 mm²/s when the pressure exceeded 2.2 MPa at 80°C. However, by mixing HFO-1132(E), the refrigerant dissolution viscosity could be maintained at 1 mm²/s or higher, suggesting improved reliability under high-temperature and highpressure conditions. This was confirmed not only in the mixed refrigerant 2 with an HFO-1132(E) mixing ratio of less than 25% by mass but also in the mixed refrigerant 1 with an HFO-1132(E) mixing ratio of 25% by mass or more and the mixed refrigerant 3 further mixed with R32.

**[Table 13]**

| Refrigerating machine oil 1 | Temperature (°C) | 80 | | | | |
|---|---|---|---|---|---|---|
| | Pressure (MPa) | 1.5 | 2.0 | 2.2 | 2.3 | 2.5 |
| Example 1 (Mixed refrigerant 1) | Refrigerant fraction (% by mass) | 14 | 20 | 21 | 23.5 | 26 |
| | Refrigerant dissolution viscosity (mm²/s) | 5.8 | 3.8 | 3.2 | 3.0 | 2.8 |
| Example 2 (Mixed refrigerant 2) | Refrigerant fraction (% by mass) | 14 | 21 | 24 | 27 | 30 |
| | Refrigerant dissolution viscosity (mm²/s) | 5.5 | 3.6 | 3.1 | 2.75 | 2.3 |
| Example 3 (Mixed refrigerant 3) | Refrigerant fraction (% by mass) | 12 | 15 | 17 | 18 | 19 |
| | Refrigerant dissolution viscosity (mm²/s) | 6.8 | 4.5 | 3.9 | 3.6 | 3.2 |
| Comparative Example 1 (HFO-1234yf alone) | Refrigerant fraction (% by mass) | 22 | 32 | 40 | 47 | 95 |
| | Refrigerant dissolution viscosity (mm²/s) | 3.6 | 2.0 | 1.4 | <1.0 | <1.0 |

Additionally, the refrigerant dissolution viscosity at 80°C and refrigerant fractions of 10 to 40% by mass was extracted from the above evaluation results and shown in Table 14. In Example 1 using the mixed refrigerant 1, the refrigerant dissolution viscosity was maintained at the same level as Comparative Example 1 using HFO-1234yf alone under the same refrigerant fraction. Similarly, when comparing the refrigerant dissolution viscosity at 0°C, the refrigerant dissolution viscosity tended to be lower when using the mixed refrigerant 1 compared to using HFO-1234yf alone under the same refrigerant fraction, indicating superior low-temperature fluidity.

**[Table 14]**

| Refrigerating machine oil 1 | Temperature (°C) | 80 | | | |
|---|---|---|---|---|---|
| | Refrigerant fraction (% by mass) | 10 | 20 | 30 | 40 |
| Example 1 (Mixed refrigerant 1) | Pressure (MPa) | 1.1 | 2.0 | 2.8 | 3.3 |
| | Refrigerant dissolution viscosity (mm²/s) | 8.0 | 3.8 | 2.1 | 1.2 |
| Example 2 (Mixed refrigerant 2) | Pressure (MPa) | 1.2 | 1.9 | 2.5 | 2.9 |
| | Refrigerant dissolution viscosity (rnm²/s) | 7.2 | 3.8 | 2.3 | 1.5 |
| Example 3 (Mixed refrigerant 3) | Pressure (MPa) | 1.3 | 2.6 | 3.5 | 4.2 |
| | Refrigerant dissolution viscosity (mm²/s) | 6.9 | 3.1 | 1.6 | 0.9 |
| Comparative Example 1 (HFO-1234yf alone) | Pressure (MPa) | 0.7 | 1.4 | 1.9 | 2.2 |
| | Refrigerant dissolution viscosity (mm²/s) | 7.5 | 4.1 | 2.3 | 1.3 |

Furthermore, the pressure-temperature-solubility characteristics and refrigerant dissolution viscosity of the working fluid compositions using the refrigerating machine oil 2 instead of the refrigerating machine oil 1 in Example 2 (Example 4) and Comparative Example 2 using the refrigerating machine oil 2 instead of the refrigerating machine oil 1 in Comparative Example 1 were evaluated similarly. The results are shown in Table 15.

**[Table 15]**

| Refrigerating machine oil 2 | Temperature (°C) | 80 | | | | | |
|---|---|---|---|---|---|---|---|
| | Pressure (MPa) | 1.0 | 1.5 | 1.9 | 2.0 | 2.5 | 2.9 |
| Example 4 (Mixed refrigerant 2) | Refrigerant fraction (% by mass) | 10 | 15 | 20 | 22 | 30 | 40 |
| | Refrigerant dissolution viscosity (mm²/s) | 6.0 | 4.5 | 3.3 | 3.0 | 2.0 | 1.3 |
| Comparative Example 2 (HFO-1234yf alone) | Refrigerant fraction (% by mass) | 14.5 | 22 | 28 | 30.5 | 66 | * |
| | Refrigerant dissolution viscosity (mm²/s) | 5.1 | 3.2 | 2.3 | 2.0 | 0.4 | * |

| | | | | | | | |
|---|---|---|---|---|---|---|---|
| *No measurement values due to exceeding saturated vapor pressure. | | | | | | | |

In addition, the pressure-temperature-solubility characteristics and refrigerant dissolution viscosity values of the working fluid composition using the mixed refrigerant 4 instead of the mixed refrigerant 1 in Example 1 (Example 5) may fall between the characteristics and values of the working fluid compositions in Examples 1 and 2.

For the working fluid composition using the refrigerating machine oil 3, the refrigerant fraction at 80°C and 2.5 MPa was 60% by mass or less, and the refrigerant fraction (refrigerant dissolution amount) can be smaller and the refrigerant dissolution viscosity can be higher compared to the case where HFO-1234yf alone is used as the refrigerant, under the same temperature and pressure conditions.

When plotting the relationship between pressure (MPa) and refrigerant dissolution viscosity (mm²/s) for the results in Tables 13 to 15, the refrigerant dissolution viscosity tended to be higher in Examples 1 to 4 using the mixed refrigerants 1 to 3 compared to Comparative Examples 1 or 2 using HFO-1234yf alone (not shown).

### [Evaluation of two-layer separation temperature]

The two-layer separation temperature was evaluated according to JIS K2211:2009 "Refrigerating Machine Oil" "Refrigerant Compatibility Test Method" as follows.

The refrigerating machine oils 1 to 4 were placed in a pressure-resistant glass container, vacuum degassed, and then sealed with one of the mixed refrigerants 1 to 4 to prepare a working fluid composition with an oil fraction of 1 to 99% by mass (typically 10 to 30% by mass where the critical dissolution temperature is obtained). The working fluid composition was gradually cooled from 20°C, and the temperature at which the working fluid composition separated into two layers or became cloudy was evaluated as the two-layer separation temperature. As a result, the two-layer separation temperature of the working fluid composition at an oil fraction of 10 to 30% by mass was -60°C or lower in any combination of the refrigerating machine oils 1 to 3 and the mixed refrigerants 1 to 4. However, when using the refrigerating machine oil 4 and the mixed refrigerant 2, the two-layer separation temperature of the working fluid composition at an oil fraction of 10 to 30% by mass was - 46 to -42°C.

### Reference Signs List

1: compressor, 2: condenser, 3: expansion mechanism, 4: evaporator, 5: flow path, 6: refrigerant circulation system, 7: accumulator, 10: refrigerating machine.

## Claims

1. A working fluid composition comprising:
a refrigerating machine oil comprising at least one base oil selected from the group consisting of a polyvinyl ether, a polyalkylene glycol, and a polyol ester; and
a refrigerant comprising trans-1,2-difluoroethylene (HFO-1132(E)) and 2,3,3,3-tetrafluoropropene (HFO-1234yf).

2. The working fluid composition according to claim 1, wherein the working fluid composition has a refrigerant fraction at 80°C and 2.5 MPa of 80% by mass or less.

3. The working fluid composition according to claim 1 or 2, wherein the working fluid composition has a refrigerant dissolution viscosity at 80°C and 2.5 MPa of 1 mm²/s or higher.

4. The working fluid composition according to claim 1 or 2, wherein the working fluid composition has a refrigerant fraction at 80°C and 2 MPa of 30% by mass or less.

5. The working fluid composition according to claim 1 or 2, wherein the working fluid composition has a refrigerant dissolution viscosity at 80°C and 2 MPa of 2.2 mm²/s or higher.

6. The working fluid composition according to claim 1 or 2, wherein the working fluid composition has a refrigerant fraction at 80°C and 1.5 MPa of 20% by mass or less.

7. The working fluid composition according to claim 1 or 2, wherein the working fluid composition has a refrigerant dissolution viscosity at 80°C and 1.5 MPa of 3.5 mm²/s or higher.

8. The working fluid composition according to claim 1 or 2, wherein the working fluid composition has a two-layer separation temperature at an oil fraction of 10 to 30% by mass of -30°C or lower.

9. The working fluid composition according to claim 1 or 2, wherein the refrigerating machine oil further comprises an acid scavenger.

10. The working fluid composition according to claim 1 or 2, wherein the refrigerating machine oil further comprises an antioxidant.

11. The working fluid composition according to claim 1 or 2, wherein the refrigerating machine oil further comprises an antiwear agent.

12. The working fluid composition according to claim 1 or 2, wherein the refrigerating machine oil further comprises an acid scavenger, an antioxidant, and an antiwear agent.

13. The working fluid composition according to claim 12, wherein the refrigerating machine oil further comprises at least one additive selected from the group consisting of a metal deactivator, a friction modifier, an antifoaming agent, a viscosity index improver, a pour point depressant, a detergent dispersant, and a rust inhibitor.

14. A refrigerating machine oil comprising at least one base oil selected from the group consisting of a polyvinyl ether, a polyalkylene glycol, and a polyol ester, and
being used together with a refrigerant comprising trans-1,2-difluoroethylene (HFO-1132(E)) and 2,3,3,3-tetrafluoropropene (HFO-1234yf).

15. A refrigerating machine comprising:
a refrigerant circulation system comprising a compressor, a condenser, an expansion mechanism, and an evaporator,
wherein the refrigerant circulation system is filled with a refrigerating machine oil comprising at least one base oil selected from the group consisting of a polyvinyl ether, a polyalkylene glycol, and a polyol ester, and a refrigerant comprising trans-1,2-difluoroethylene (HFO-1132(E)) and 2,3,3,3-tetrafluoropropene (HFO-1234yf).
